# EUROPEAN PATENT APPLICATION

(11) **EP 3 992 150 A1**
(43) Date of publication of application: **04.05.2022**
(21) Application number: 20833061.3
(22) Date of filing: 08.06.2020
(51) Int. Cl.: C01G 53/00, H01M 4/36, H01M 4/505, H01M 4/525

(54) **POSITIVE ELECTRODE ACTIVE MATERIAL FOR LITHIUM ION SECONDARY BATTERIES, METHOD FOR PRODUCING SAME, AND LITHIUM ION SECONDARY BATTERY**

(30) Priority: 25.06.2019 JP 2019117941; 23.03.2020 JP 2020051908
(71) Applicant: Sumitomo Metal Mining Co., Ltd., Tokyo 105-8716 (JP)
(72) Inventor: KATO, Toshihiro, Tokyo 105-8716 (JP); HAYASHI, Tetsutaro, Niihama-shi, Ehime 792-0002 (JP); BONG, Shun Willy, Niihama-shi, Ehime 792-0002 (JP)
(74) Representative: Moreland, David
(86) International application number: PCT/JP2020/022534
(87) International publication number: WO 2020/261962

(57) **Abstract**

To further improve the output characteristics of a positive electrode active material formed of an NMC ternary-system lithium nickel manganese cobalt-containing composite oxide by a porous structure.

A method for producing a positive electrode active material for a lithium-ion secondary battery includes: a dry mixing process of mixing a tungsten compound with a lithium nickel manganese cobalt-containing composite oxide that is a base material to obtain a mixture; a water spray mixing process of spraying water to the mixture in an amount of 1% by mass or more and 30% by mass or less with respect to the total mass of the mixture while the mixture is stirred, to mix the mixture; a heat treatment process of subjecting the mixture obtained after the water spray mixing process to a heat treatment at a temperature of 500°C or lower; and a drying process of drying the mixture obtained after the heat treatment process at a temperature of 500°C or lower to obtain a W- and Li-containing compound-coated lithium nickel manganese cobalt-containing composite oxide in which fine particles and coating films of a W- and Li-containing compound exist on a surface of the primary particles, and in at least drying process, the drying is performed using a vacuum dry mixing apparatus in a vacuum atmosphere.

## Description

### Technical Field

The present invention relates to a positive electrode active material for a lithium-ion secondary battery, and more specifically to a positive electrode active material for a lithium-ion secondary battery, the positive electrode active material being formed of a W- and Li-containing compound-coated lithium nickel-containing composite oxide, a method for producing the same, and a lithium-ion secondary battery using the positive electrode active material for a lithium-ion secondary battery as a positive electrode material.

### Background Art

In recent years, with spread of a portable electronic device such as a smartphone, a tablet terminal, a digital camera, or a notebook personal computer, there is a strong demand for development of a small and lightweight secondary battery having a high energy density. Furthermore, there is a strong demand for development of a high-capacity and high-output secondary battery as a power source for an electric car such as a hybrid electric car, a plug-in hybrid electric car, or a battery-powered electric car.

As a secondary battery satisfying such a requirement, there is a lithium-ion secondary battery. This lithium-ion secondary battery includes a negative electrode, a positive electrode, a non-aqueous electrolyte or a solid electrolyte, and the like, and as an active material used as a material for these negative electrode and positive electrode, a material capable of de-inserting and inserting lithium is used. Note that, as the non-aqueous electrolyte, there is a non-aqueous electrolyte solution that is obtained by dissolving a lithium salt as a supporting salt in an organic solvent, and as the solid electrolyte, there is an inorganic or organic solid electrolyte that is non-flammable and has lithium-ion conductivity.

Among lithium-ion secondary batteries, a lithium-ion secondary battery using a lithium transition metal-containing composite oxide having a layered rock salt type or spinel type structure as a positive electrode material has been researched and developed and has been put into practical use as a battery having a high energy density because a voltage at a level of 4 V can be obtained.

As the positive electrode material of the lithium-ion secondary battery, positive electrode active materials formed of lithium transition metal-containing composite oxides such as lithium cobalt composite oxide (LiCoO₂) for which synthesis is relatively easy, lithium nickel composite oxide (LiNiO₂) that uses nickel less expensive than cobalt, lithium nickel manganese cobalt composite oxide (LiNi_{1/3}Mn_{1/3}Co_{1/3}O₂), lithium manganese composite oxide (LiMn₂O₄) that uses manganese, and lithium nickel manganese composite oxide (LiNi_{0.5}Mn_{0.5}O₂) have been proposed.

In recent years, a ternary-system positive electrode active material formed of lithium nickel manganese cobalt-containing composite oxide (NMC) containing at least nickel, manganese, and cobalt as a transition metal, including lithium nickel manganese cobalt composite oxide (LiNi_{1/3}Mn_{1/3}Co_{1/3}O₂) of these lithium transition metal-containing composite oxides, has attracted attention as a material that is excellent in thermal stability, has a high capacity, has also satisfactory cycle characteristics of a battery capacity, has low resistance, and is capable of obtaining a high output. The lithium nickel manganese cobalt-containing composite oxide is a compound having a layered crystal structure that is similar to lithium cobalt composite oxide, lithium nickel composite oxide, and the like.

The lithium transition metal-containing composite oxide has been developed focusing on an increase in output by reducing its internal resistance. From this point of view, lithium nickel cobalt aluminum-containing composite oxide (NCA) with improved properties of lithium nickel composite oxide has been also receiving public attention. The lithium nickel manganese cobalt-containing composite oxide is a material that is more excellent in weather resistance and more easily handled even when compared with this lithium nickel cobalt aluminum-containing composite oxide, and thus is regarded as a most important material in development of the lithium transition metal-containing composite oxide.

As described above, with respect to the ternary-system positive electrode active material formed of lithium nickel manganese cobalt-containing composite oxide, particularly, in power source application for an electric car, an increase in output by further reducing the internal resistance has been required to be achieved at a high level.

In order to improve the output characteristics and cycle characteristics of the lithium nickel manganese cobalt-containing composite oxide, first, it is necessary to configure the lithium nickel manganese cobalt-containing composite oxide with particles having a small particle size of 3 µm or more and 10 µm or less and a narrow particle size distribution. Particles having a small particle size have a large specific surface area, and when such particles are used as a positive electrode active material, the reaction surface area with a non-aqueous electrolyte can be sufficiently secured. Further, the particles form a thin positive electrode, so that a movement distance of lithium-ions between a positive electrode and a negative electrode can be shortened. Thus, a decrease in positive electrode resistance can be achieved. Furthermore, particles having a narrow particle size distribution are able to make uniform a voltage to be applied to particles in an electrode is possible, so that a decrease in battery capacity due to selective degradation of fine particles can be suppressed.

Furthermore, it has been researched and developed that the particle structure of the lithium nickel manganese cobalt-containing composite oxide is improved in order to further improve output characteristics. For example, it is conceivable that controlling of the form of the positive electrode active material and forming of a space section into which a non-aqueous electrolyte can be penetrated inside the positive electrode active material are effective for improvement in output characteristics. By employing such a structure, as compared with a positive electrode active material with a solid structure having the same degree of particle size, the reaction surface area with the non-aqueous electrolyte can be increased. Thus, the positive electrode resistance can be considerably reduced. Note that, it is known that the positive electrode active material inherits the particle properties of a transition metal-containing composite hydroxide that is a precursor thereof. That is, in order to obtain the aforementioned positive electrode active material, it is necessary to appropriately control the particle size, the particle size distribution, the particle structure, and the like of secondary particles of the transition metal-containing composite hydroxide that is a precursor thereof.

For example, JP2018-104273A discloses a method for producing a transition metal-containing composite hydroxide, in which crystallization reaction is divided into a nuclear generation process of performing nuclear generation by adjusting the pH value of a reaction aqueous solution in a range of 12.0 or more and 14.0 or less and a particle growth process of growing particles by adjusting the pH value of the reaction aqueous solution including the generated nuclei to be lower than the pH value of the nuclear generation process and in a range of 10.5 or more and 12.0 or less, and atmosphere control of setting an initial reaction atmosphere of the nuclear generation process and the particle growth process to a non-oxidizing atmosphere, switching the reaction atmosphere to an oxidizing atmosphere at a predetermined timing in the particle growth process, and then switching the reaction atmosphere to the non-oxidizing atmosphere again is performed twice or more.

According to this method, it is possible to obtain a transition metal-containing composite hydroxide that is formed of secondary particles having a small particle size and a narrow particle size distribution and having a center formed with plate-shaped or needle-shaped primary particles being aggregated and two or more laminated structures, each of which has a low density layer formed with fine primary particles being aggregated and a high density layer formed with plate-shaped primary particles being aggregated, and in which the low density layer and the high density layer are alternately laminated outside the center. A positive electrode active material using the transition metal-containing composite hydroxide having such a structure as a precursor includes a porous structure having a small particle size and a narrow particle size distribution and having a space section. In a secondary battery using the positive electrode active material having such a porous structure, output characteristics can be improved as well as capacity characteristics and cycle characteristics.

Meanwhile, in a lithium-ion battery, in order to achieve an increase in output by further reducing internal resistance, a method of adding a tungsten compound to a lithium transition metal-containing composite oxide has been studied.

For example, JP2015-216105A proposes a positive electrode active material for a lithium-ion secondary battery, the positive electrode active material being obtained in such a manner that a lithium mixture prepared by mixing a nickel compound with a lithium compound is fired in an oxidizing atmosphere at a temperature of 700°C or higher and 780°C or lower for 1 hour or longer and 6 hours or shorter to obtain, as a base material, a lithium nickel-containing composite oxide represented by general formula: Li_{b}Ni_{1-x-y}CoₓM_{y}O₂ (in the formula, M represents at least one element selected from Mg, Al, Ca, Ti, V, Cr, Mn, Nb, Zr, and Mo, 0.95 ≤ b ≤ 1.03, 0 < x ≤ 0.15, 0 < y ≤ 0.07, and x + y ≤ 0.16) and formed of primary particles and secondary particles formed with the primary particles being aggregated, a tungsten compound is added while washing with water or after washing with water of the base material to disperse W on a surface of primary particles of the base material, and a heat treatment is performed in an oxygen atmosphere or a vacuum atmosphere at a temperature of 100°C or higher and 600°C or lower, the positive electrode active material having fine particles of a W- and Li-containing compound on a surface of primary particles of the base material.

Furthermore, JP2017-084513A proposes a positive electrode active material for a lithium-ion secondary battery which is obtained by adding a tungsten compound while washing with water or after washing with water of a base material obtained similarly to JP2015-216105A, dispersing W on a surface of primary particles of the base material while controlling the moisture content of the base material to 6.5% by mass or more and 11.5% by mass or less, and performing a heat treatment in an oxygen atmosphere or a vacuum atmosphere at a temperature of 100°C or higher and 600°C or lower, and has a coating film containing W and Li and having a thickness of 1 nm or more and 200 nm or less on the surface of primary particles of the base material.

By allowing fine particles and/or coating films of a W- and Li-containing compound such as lithium tungstate to exist on a surface of primary particles constituting a lithium transition metal-containing composite oxide serving as a base material, these fine particles or coating films function as a protective film that prevents contact between the lithium transition metal-containing composite oxide and an electrolyte and suppresses the formation of a deposited material such as a phosphoric salt and these fine particles or coating films have a crystal structure having a Li diffusion path. Thus, it is conceivable to achieve a decrease in interface resistance.

It is important that the fine particles and/or the coating films of the W- and Li-containing compound such as lithium tungstate exist uniformly on a surface of primary particles constituting the lithium transition metal-containing composite oxide serving as a base material. Furthermore, it is important that the fine particles and/or the coating films of the W- and Li-containing compound such as lithium tungstate are formed uniformly even between lithium transition metal-containing composite oxides.

From such viewpoints, JP2018-186065A proposes that a positive electrode active material for a lithium-ion secondary battery is obtained by mixing a lithium transition metal-containing composite oxide serving as a base material with tungsten oxide and further mixing water by spraying to obtain a lithium mixture, and drying the lithium mixture, the positive electrode active material which contains secondary particles configured by a plurality of primary particles being aggregated and lithium tungstate and in which the amount of tungsten existing on a surface thereof is 0.1% by mass or more and 1.0% by mass or less with respect to the whole positive electrode active material and the amount of tungsten existing inside thereof is 0.1% by mass or more and 1.0% by mass or less with respect to the whole positive electrode active material. According to such a method, a neutralization reaction between released excessive lithium such as lithium hydroxide and tungsten oxide can be allowed to proceed more uniformly on the surface of the lithium transition metal-containing composite oxide serving as a base material in the presence of water.

### Citation List

### Patent Literature

Patent Literature 1: JP2018-104273A
Patent Literature 2: JP2015-216105A
Patent Literature 3: JP2017-084513A
Patent Literature 4: JP2018-186065A

### Summary of Invention

### Technical Problem

In order to further increase an output of a positive electrode active material formed of a lithium nickel manganese cobalt-containing composite oxide having a porous structure, the present inventors have conducted studies to obtain a positive electrode active material formed of a W- and Li-containing compound-coated lithium nickel manganese cobalt-containing composite oxide by dry mixing a lithium nickel manganese cobalt-containing composite oxide with a porous structure serving as a base material with a tungsten compound and further mixing water by spraying to obtain a mixture and drying the mixture.

As a result, the present inventors have found that, by forming the coating of the W- and Li-containing compound such as lithium tungstate on the surface of the lithium nickel manganese cobalt-containing composite oxide under predetermined conditions, uniformity of the fine particles and the coating films of the W- and Li-containing compound in a coated form can be further improved.

An object of the present invention is to achieve a further increase in output of a W- and Li-containing compound-coated lithium nickel manganese cobalt-containing composite oxide having a porous structure by allowing fine particles and coating films of a W- and Li-containing compound such as lithium tungstate to exist more uniformly with a more appropriate size or thickness.

### Solution to Problem

The present invention relates to a ternary-system positive electrode active material for a lithium-ion secondary battery, the positive electrode active material formed of W- and Li-containing compound-coated lithium nickel manganese cobalt-containing composite oxide (NMC) having a porous structure which contains at least nickel, manganese, and cobalt as a transition metal and is formed of secondary particles having a porous structure and in which fine particles and coating films of a W- and Li-containing compound such as lithium tungstate exist on at least a part of a surface of the primary particles constituting the secondary particles, a method for producing the same, and a lithium-ion secondary battery using this positive electrode active material for a lithium-ion secondary battery as a positive electrode material.

A positive electrode active material for a lithium-ion secondary battery of present invention relates to a positive electrode active material for a lithium-ion secondary battery that is a ternary-system positive electrode active material formed of a lithium nickel manganese cobalt-containing composite oxide, the positive electrode active material formed of a W- and Li-containing compound-coated lithium nickel manganese cobalt-containing composite oxide which is configured by secondary particles formed with a plurality of primary particles being aggregated and in which fine particles and coating films of a W- and Li-containing compound exist on at least a part of a surface of at least a part of the primary particles constituting the secondary particles.

In the positive electrode active material for a lithium-ion secondary battery of the present invention, the secondary particle has a porous structure. Specifically, the secondary particle comprises an outer shell section formed with the aggregated primary particles, an aggregated section existing inside the outer shell section, formed with the aggregated primary particles, and electrically connected to the outer shell section, and a space section existing in a dispersed manner in the aggregated section.

Particularly, in the positive electrode active material for a lithium-ion secondary battery of the present invention, it is characterized in that a porosity as measured by cross-sectional observation of the secondary particles is 10% or more and 50% or less.

Furthermore, it is characterized in that a particle size of fine particles of the W- and Li-containing compound existing on the surface of the secondary particle as determined from surface observation of the secondary particle using a scanning electron microscope is preferably 5 nm or more and 400 nm or less. It is preferable that the particle size of the fine particles is preferably 10 nm or more and 350 nm or less.

Meanwhile, it is preferable that an average film thickness of the coating films of the W- and Li-containing compound existing on the surface of the secondary particle as determined from cross-sectional observation of the secondary particle using a transmission electron microscope is 1 nm or more and 200 nm or less.

It is preferable that an average particle size of the fine particles is 30 nm or more and 100 nm or less.

It is preferable that the W- and Li-containing compound is lithium tungstate. It is more preferable that the lithium tungstate includes 7Li₂W0₄ ·4H₂O.

It is preferable that an average particle size MV of the secondary particles is 3 µm or more and 10 µm or less, and [(d90 - d10)/average particle size MV], which is an index indicating the spread of particle size distribution of the secondary particles, is 0.7 or less.

It is preferable that a thickness of the outer shell section of the secondary particle is 0.1 µm or more and 1.0 µm or less.

It is preferable that a tap density of the positive electrode active material is preferably 1.0 g/cm³ or more, more specifically, 1.1 g/cm³ or more and 1.8 g/cm³ or less.

It is preferable that a BET specific surface area of the positive electrode active material is 2.0 m²/g or more and 5.0 m²/g or less.

It is preferable that the positive electrode active material for a non-electrolyte secondary battery of the present invention is formed of a lithium nickel manganese cobalt-containing composite oxide that is represented by General Formula (A): Li₁₊ᵤNiₓMn_{y}CO_{z}WₛMₜO₂, wherein -0.05 ≤ u ≤ 0.50, x + y + z + s + t = 1, 0.3 ≤ x ≤ 0.7, 0.15 ≤ y ≤ 0.4, 0.15 ≤ z ≤ 0.4, 0.0005 ≤ s ≤ 0.03, 0 ≤ t ≤ 0.1, M is one or more additive elements selected from Mg, Al, Si, Ca, Ti, V, Cr, Zr, Nb, Mo, Hf, Ta, and W, and has a crystal structure of a hexagonal layered rock-salt structure.

A method for producing a positive electrode active material for a lithium-ion secondary battery of the present invention includes:
a dry mixing process of mixing a tungsten compound with a lithium nickel manganese cobalt-containing composite oxide that is a base material in an amount of 0.1% by mass or more and 5% by mass or less with respect to a total mass of the composite oxide to obtain a mixture, the composite oxide being configured by secondary particles formed with a plurality of primary particles being aggregated, the secondary particle having a porous structure that comprises an outer shell section formed with the aggregated primary particles, an aggregated section existing inside the outer shell section, formed with the aggregated primary particles, and electrically connected to the outer shell section, and a space section existing in a dispersed manner in the aggregated section;
a water spray mixing process of spraying water to the mixture in an amount of 1% by mass or more and 30% by mass or less with respect to a total mass of the mixture while the mixture is stirred, to mix the mixture;
a heat treatment process of subjecting the mixture obtained after the water spray mixing process to a heat treatment at a temperature of 500°C or lower; and
a drying process of drying the mixture obtained after the heat treatment process at a temperature of 500°C or lower to obtain a W- and Li-containing compound-coated lithium nickel manganese cobalt-containing composite oxide in which fine particles and coating films of a W- and Li-containing compound exist on a surface of the primary particles.

Particularly, the method for producing a positive electrode active material for a lithium-ion secondary battery of the present invention is characterized in that in at least the drying process, the drying is performed using a vacuum dry mixing apparatus in a vacuum atmosphere.

It is preferable that in the water spray mixing process, the stirring is performed at a peripheral speed of 4 m/sec or more and 30 m/sec or less when water spraying and the water spraying is performed at a water spray velocity of 0.01 ml/min or more and 0.1 ml/min or less per 1 g of the mixture, and after the water spraying, the mixing is continued in a time of 5 minutes or longer and 120 minutes or shorter while the stirring is performed at a peripheral speed in a range of 4 m/sec or more and 30 m/sec or less.

It is more preferable that the water spraying is performed using a plurality of nozzles, and a water spray velocity of each of the plurality of nozzles is set to 0.005 ml/sec or more and 0.02 ml/min or less per 1 g of the mixture.

It is preferable that in the heat treatment process, the heat treatment is performed at a temperature of 40°C or higher and 200°C or lower in a time of 15 minutes or longer and 120 minutes or shorter while the mixture is stirred at a peripheral speed of 4 m/sec or more and 30 m/sec or less.

It is preferable that in the drying process, the drying is performed at a temperature of 70°C or higher and 200°C or lower in a time of 60 minutes or longer and 240 minutes or shorter while the mixture is stirred at a peripheral speed of 4 m/sec or more and 30 m/sec or less.

It is preferable that the method includes a cooling process of cooling the mixture to 25°C in a time of 60 minutes or longer and 240 minutes or shorter while the composite oxide is stirred at a peripheral speed of 1 m/sec or more and 20 m/sec or less, in a vacuum atmosphere, after the drying process.

It is preferable that the dry mixing process is performed in a time of 5 minutes or longer and 50 minutes or shorter while stirring is performed at a peripheral speed of 5 m/sec or more and 30 m/sec or less. The dry mixing process is also preferably performed using the vacuum dry mixing apparatus.

It is preferable that the positive electrode active material for a lithium-ion secondary battery is formed of a lithium nickel manganese composite oxide that is represented by General Formula (A): Li₁₊ᵤNiₓMn_{y}Co_{z}WₛMₜO₂ (-0.05 ≤ u ≤ 0.50, x + y + z + s + t = 1, 0.3 ≤ x ≤ 0.7, 0.15 ≤ y ≤ 0.4, 0.15 ≤ z ≤ 0.4, 0.0005 ≤ s ≤ 0.03, 0 ≤ t ≤ 0.1, M is one or more additive elements selected from Mg, Al, Si, Ca, Ti, V, Cr, Zr, Nb, Mo, Hf, Ta, and W) and has a crystal structure of a hexagonal layered rock-salt structure.

A lithium-ion secondary battery of the present invention is characterized by including a positive electrode, a negative electrode, a separator, and a non-aqueous electrolyte (a non-aqueous electrolyte secondary battery) or including a positive electrode, a negative electrode, and a solid electrolyte (a solid electrolyte secondary battery), in which the positive electrode active material for a lithium-ion secondary battery of the present invention is used as a positive electrode active material used in the positive electrode.

### Advantageous Effects of Invention

According to the present invention, there is provided a positive electrode active material for a lithium-ion secondary battery, the positive electrode active material being formed of a W- and Li-containing compound-coated lithium nickel manganese cobalt-containing composite oxide in which fine particles of a W- and Li-containing compound are allowed to exist more finely and more uniformly and coating films of the W- and Li-containing compound are allowed to exist more uniformly on a surface of secondary particles constituting a lithium nickel manganese cobalt-containing composite oxide that is a base material and has a porous structure.

The positive electrode active material of the present invention has excellent battery characteristics attributable to a ternary-system composition as in a conventional lithium nickel manganese cobalt-containing composite oxide having a porous structure. In addition, in the positive electrode active material of the present invention, since the fine particles of the W- and Li-containing compound exist more finely and the coating films of the W- and Li-containing compound exist uniformly on at least a part of a surface of at least a part of primary particles constituting the secondary particles, compared with the conventional lithium nickel manganese cobalt-containing composite oxide having a porous structure, the resistance can be further reduced and a lithium-ion secondary battery having a higher output can be provided.

Therefore, by applying the positive electrode active material for a lithium-ion secondary battery of the present invention to a positive electrode material of a lithium-ion secondary battery for a power supply of an electric car, in comparison with the related art, durability is more excellent and high output characteristics can be provided, which has great industrial significance.

### Brief Description of Drawings

Fig. 1 is a chart diagram illustrating an example of a process of producing a positive electrode active material for a lithium-ion secondary battery of the present invention.
Fig. 2 is a cross sectional view schematically illustrating an example of the structure of a W- and Li-containing compound-coated lithium nickel manganese cobalt-containing composite oxide of the positive electrode active material for a lithium-ion secondary battery of the present invention.
Fig. 3 is an SEM photograph of a surface of secondary particles that constitute a positive electrode active material for a lithium-ion secondary battery of Example 1 of the present invention.
Fig. 4 is an SEM photograph of a surface of secondary particles of a positive electrode active material for a lithium-ion secondary battery of Comparative Example 1.
Fig. 5 is a schematic cross-sectional view of a 2032 type coin-type battery used for battery evaluation.
Fig. 6 is a schematic explanatory diagram of an equivalent circuit that was used for a measurement example and analysis in impedance evaluation.

### Description of Embodiments

The present invention will be described in order of a positive electrode active material for a lithium-ion secondary battery, a method for producing the same, and a lithium-ion secondary battery.

### 1. Positive electrode active material for lithium-ion secondary battery

A positive electrode active material for a lithium-ion secondary battery of the present invention (hereinafter, referred to as "positive electrode active material") relates to a W- and Li-containing compound-coated lithium nickel manganese cobalt-containing composite oxide (hereinafter, referred to as "composite oxide") which is configured by secondary particles with a porous structure and in which fine particles and coating films of a W- and Li-containing compound such as lithium tungstate exist on at least a part of a surface of at least a part of the primary particles constituting the secondary particles.

### (1) Particle structure

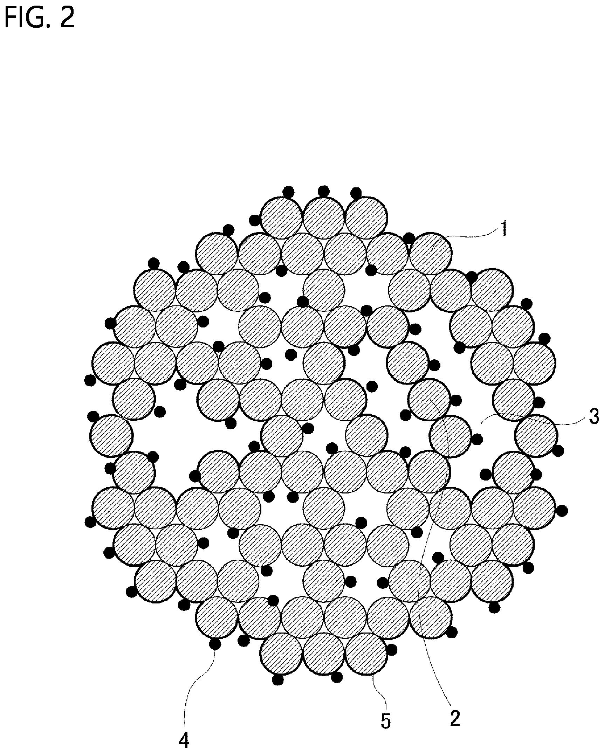

The positive electrode active material of the present invention is a ternary-system positive electrode active material containing at least nickel, manganese, and cobalt as a transition metal. This positive electrode active material is configured by secondary particle formed with a plurality of primary particles being aggregated. In the positive electrode active material of the present invention, as illustrated in Fig. 2, the secondary particle has a porous structure that includes an outer shell section 1 formed with primary particles being aggregated, an aggregated section 2 existing inside the outer shell section 1, formed with primary particles being aggregated similarly to the outer shell section 1, and electrically connected to the outer shell section 1, and a space section 3 existing in a dispersed manner between the aggregated sections 2 inside the outer shell section 1.

Herein, the expression "electrically connected" means that aggregated sections of primary particles are in a state of being structurally connected to each other and being capable of being electrically connected with each other. The space sections constituting a pore structure exist while being separated from each other due to the presence of the aggregated sections, but are communicated with the outside and with each other via a grain boundary or a gap between primary particles, so that the non-aqueous electrolyte and a conductive assistant can be penetrated into the space sections.

In the positive electrode active material of the present invention, owing to such a particle structure, as compared with a conventional positive electrode active material having a hollow structure, both of a larger specific surface area and a higher tap density are achieved. In the positive electrode active material having the particle structure of the present invention, since the non-aqueous electrolyte is penetrated inside the secondary particles via a grain boundary or a gap between primary particles or the space section, lithium can be de-inserted and inserted not only in the surface of the secondary particles but also inside the secondary particles. Moreover, in this positive electrode active material, since the outer shell section and the aggregated section are electrically connected and the cross-sectional area of the path thereof is sufficiently large, the resistance inside particles (internal resistance) is considerably reduced.

When a lithium-ion secondary battery (hereinafter, referred to as "secondary battery") is configured using the positive electrode active material having such a structure as a positive electrode material, the durability thereof is improved and deterioration of output characteristics attributable to resistance of the positive electrode interface resistance caused by the degradation is prevented. Thus, output characteristics can be further improved without impairing a battery capacity and cycle characteristics. Furthermore, since the tap density is high, the filling capability of the positive electrode active material is high. Thus, the capacity per volume of the secondary battery can be maintained high.

### (2) Fine particles and coating films of W- and Li-containing compound

In the positive electrode active material of the present invention, as illustrated in Fig. 2, coating formed by fine particles 4 and coating films 5 of the W- and Li-containing compound exists on at least a part of a surface of at least a part of the primary particles constituting the secondary particles of the composite oxide that is a base material and has a porous structure.

Particularly, in the positive electrode active material for a lithium-ion secondary battery of the present invention, the particle size of fine particles of the W- and Li-containing compound existing on the surface of the secondary particle as determined from surface observation of the secondary particle using a scanning electron microscope (SEM) is preferably 5 nm or more and 400 nm or less. Furthermore, it is preferable that an average film thickness of the coating films of the W- and Li-containing compound existing on the surface of the secondary particle as determined from cross-sectional observation of the secondary particle using a transmission electron microscope (TEM) is 1 nm or more and 200 nm or less.

Generally, when the surface of the positive electrode active material is completely coated with a different kind of compound, the movement of lithium-ions (intercalation) is greatly limited, and as a result, an advantage of high capacity which ternary-system composite oxide has is canceled.

On the other hand, in the present invention, fine particles and coating films of a W- and Li-containing compound exist on at least a part of a surface of at least a part of the primary particles constituting the secondary particles of the composite oxide.

The fine particles and the coating films of the W- and Li-containing compound have high lithium-ion conductivity and have an effect of promoting the movement of lithium-ions. Therefore, since the conduction path of Li is formed in the interface with the electrolyte by causing the fine particles and the coating films of the W- and Li-containing compound to exist on the surface of the primary particles, the reaction resistance of the positive electrode active material (also referred to as "positive electrode resistance") is reduced, and thus output characteristics thereof can be improved.

That is, a reduction in the positive electrode resistance will reduce the voltage lost in the secondary battery and relatively increase the voltage actually applied to the load. Thus, a high output is obtainable. Furthermore, an increase in the voltage applied to the load allows a sufficient amount of lithium to be stored in and released from the positive electrode. Thus, a battery capacity is also improved. Further, since the load of the positive electrode active material when charging and discharging is also reduced by reducing the positive electrode resistance, cycle characteristics can also be improved.

The function and effect obtained when fine particles and coating films of the W- and Li-containing compound as described above are allowed to exist on a surface of primary particles are effectively obtained by allowing fine particles that are finer and coating films that have an appropriate thickness to exist on a surface of secondary particles.

In the present invention, fine particles that are finer, that is, have a predetermined particle size and coating films that have a predetermined thickness, which are formed by the W- and Li-containing compound, are formed on at least a part of a surface of at least primary particles so that these fine particles and coating films exist more uniformly on a surface of the secondary particles. As a result, the lithium-ion conduction is effectively improved without excessively decreasing an electrode surface or significantly increasing the bulk resistance of the electrode, so that a decrease in charge and discharge capacity is suppressed and the reaction resistance can be reduced.

Note that, when the fine particles and the coating films of the Wand Li-containing compound are allowed to excessively exist on a surface of primary particles constituting the secondary particles of the positive electrode active material, a decrease in the BET specific surface area of the positive electrode active material occurs. Thus, even if the W- and Li-containing compound has high lithium-ion conductivity, the contact area between the positive electrode active material and the electrolyte becomes smaller, and accordingly, a decrease in charge and discharge capacity and an increase in reaction resistance are likely to occur. Furthermore, when the W- and Li-containing compound exists, the reaction resistance is reduced; however, since the W- and Li-containing compound itself has low electron conductivity, the electron conductivity of an electrode is decreased, which leads to a decrease in output characteristics of the secondary battery.

From such viewpoints, in the positive electrode active material of the present invention, it is sufficient that the fine particles and the coating films of the W- and Li-containing compound exist on at least a part of a surface of at least a part of the primary particles constituting the secondary particles. Further, when the amount of the Wand Li-containing compound is the same, the particle size of fine particles of the W- and Li-containing compound is set to 5 nm or more and 400 nm or less to make the fine particles of the W- and Li-containing compound finer than those of a conventional W- and Li-containing compound-coated positive electrode active material, so that the fine particles are allowed to exist more uniformly and more evenly on the surface of the secondary particles. Furthermore, the average film thickness of the coating films of the W- and Li-containing compound is set to 1 nm or more and 200 nm or less to make the coating films of the W- and Li-containing compound thinner than that of a conventional W- and Li-containing compound-coated positive electrode active material, so that the coating films are allowed to exist more uniformly and more evenly on the surface of the secondary particles.

When the particle size of the fine particles of the W- and Li-containing compound is less than 5 nm, the fine particles do not have sufficient lithium-ion conductivity in some cases. When the particle size exceeds 400 nm, the formation of coating by the fine particles becomes non-uniform, so that the effect of reducing the reaction resistance is not sufficiently obtained in some cases.

The particle size of the fine particles is preferably 10 nm or more and 350 nm or less and more preferably 20 nm or more and 300 nm or less. It is preferable that 50% or more of the total number of fine particles formed on the surface of the secondary particles have a particle size of 10 nm or more and 350 nm or less. In this case, a higher effect of improving battery characteristics is obtained.

From the same reason, the average particle size of the fine particles of the W- and Li-containing compound is preferably 30 nm or more and 100 nm or less and more preferably 40 nm or more and 80 nm or less. By also regulating the average particle size in this way, as compared with a conventional W- and Li-containing compound-coated positive electrode active material, the fine particles become finer and can be allowed to exist more uniformly and more evenly on the surface of the secondary particles.

The particle size of the fine particles is obtained by measuring the maximum diameter of each of the fine particles from surface observation of arbitrary number (for example, ten) of secondary particles using a scanning electron microscope (SEM). Furthermore, the average particle size of the fine particles is obtained, for example, from surface observation of arbitrary number (for example, ten) of secondary particles using a scanning electron microscope (SEM) and calculated by measuring the particle size of each of arbitrary number (for example, ten) of fine particles existing on the surface of each of the secondary particles and obtaining an average value thereof.

When the average film thickness of the coating films of the W- and Li-containing compound is less than 1 nm, the coating films are not sufficiently formed or the coating films do not have sufficient lithium-ion conductivity in some cases. When the average film thickness of the coating films exceeds 200 nm, the coating films become too thick to cause a decrease in BET specific surface area of the positive electrode active material and decrease the contact area between the positive electrode active material and the electrolyte, so that the effect of reducing the reaction resistance is not sufficiently obtained in some cases.

The average film thickness of the coating films is more preferably 1 nm or more and 100 nm or less and further preferably 1 nm or more and 80 nm or less. In this case, a higher effect of improving battery characteristics is obtained.

The average film thickness of the coating films is obtained from cross-sectional observation of the secondary particles using a transmission electron microscope (TEM). Furthermore, the average film thickness of the coating films is obtained by measuring the average film thickness of each of arbitrary number (for example, ten) of coating films existing on the surface of arbitrary number (for example, ten) of primary particles on which the coating films exist in the secondary particle and further averaging the obtained respective values of arbitrary number (for example, ten) of secondary particles.

The contact with the electrolyte occurs on the surface of the primary particles. Thus, it is important that the fine particles and the coating films of the W- and Li-containing compound exist on at least a part of a surface of at least a part of the primary particles, preferably all of the primary particles. Herein, regarding the surface of the primary particles in the present invention, the surface of the primary particles includes both of a primary particle surface exposed to the outer surface of the secondary particle and a primary particle surface exposed to the vicinity of the surface of the secondary particle as well as to the gap inside thereof thereby being connected to outside the secondary particle so that the electrolyte can be penetrated thereto. Further, the grain boundary between primary particles is also included in the surface of the primary particles as long as the bond of the primary particles is incomplete so that the electrolyte can be penetrated thereto.

By forming fine particles, which are finer, and coating films of the W- and Li-containing compound on at least a part of a surface of primary particles so that the fine particles and the coating films of the W- and Li-containing compound exist more uniformly and evenly on the surface of the secondary particles, the movement of lithium-ions is further promoted, and the reaction resistance of particles constituting the positive electrode active material can be further reduced.

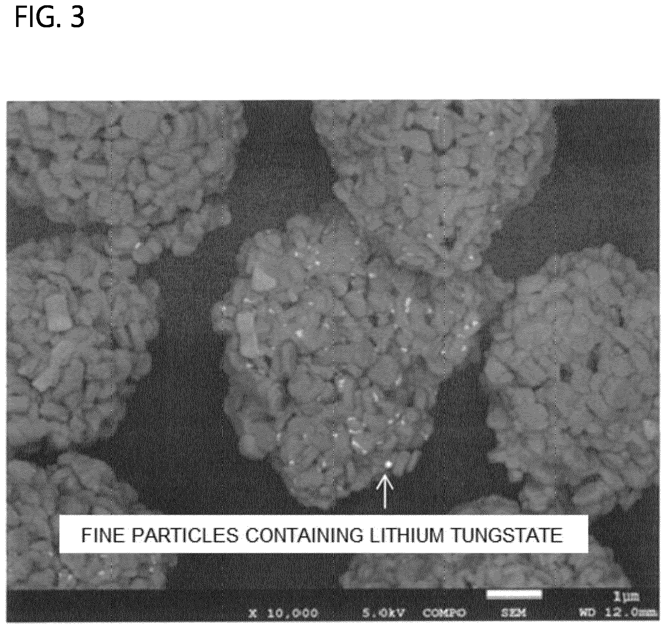

That is, it is not necessary that the fine particles of the W- and Li-containing compound exist on surfaces of all primary particles constituting the secondary particles that can contact with the electrolyte. As illustrated in Fig. 3, the fine particles of the W- and Li-containing compound may be scattered on parts of the secondary particles, that is, on a surface of arbitrary primary particles. It is also not necessary that the coating films of the W- and Li-containing compound exist on surfaces of all primary particles constituting the secondary particles that can contact with the electrolyte. The fine particles of the W- and Li-containing compound may cover parts of the secondary particles, that is, a surface of arbitrary primary particles. However, it is preferable that the coating films of the W- and Li-containing compound cover most part of a surface or entire surface of arbitrary primary particles, and the coating films may cover surfaces of the whole primary particles.

The fine particles of the W- and Li-containing compound may be scattered on a surface of the secondary particles. That is, when the fine particles of the W- and Li-containing compound exist on at least a part of a surface of primary particles exposed to the outer surface of secondary particles constituting the positive electrode active material and the gap thereof, the effect of reducing reaction resistance is sufficiently obtained along with the existence of the coating films of the W- and Li-containing compound.

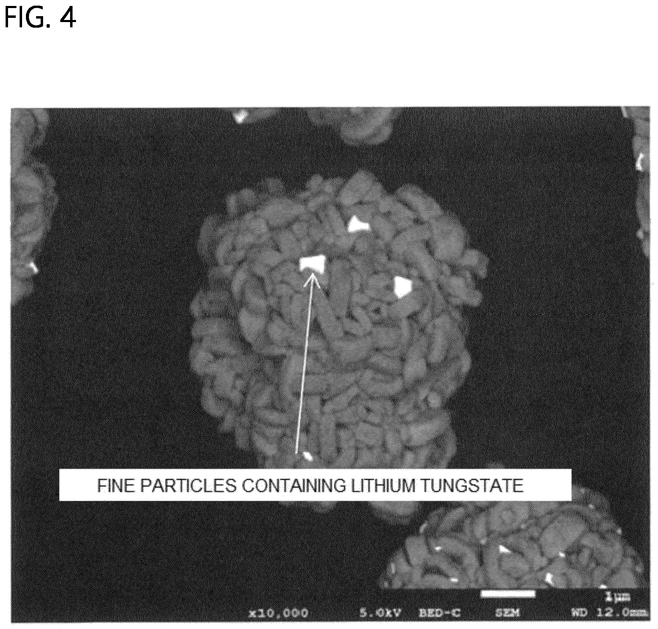

However, as the existence ratio of the fine particles of the Wand Li-containing compound on surfaces of the secondary particles and the primary particles is higher and the fine particles exist more uniformly, the effect of reducing reaction resistance is more easily obtained. In this regard, in the positive electrode active material of the present invention illustrated in Fig. 3, in comparison with a conventional positive electrode active material illustrated in Fig. 4, when the W- and Li-containing compound is regarded to be the same in both cases, since fine particles that are finer exist on a surface of secondary particles or a surface of primary particles, such an effect is sufficiently obtained.

When the fine particles and the coating films exist non-uniformly between particles constituting the lithium nickel-containing composite oxide, the movement of lithium-ions between particles becomes non-uniform. Thus, a load is applied to a specific particle to cause a deterioration of cycle characteristics or an increase in reaction resistance. Therefore, it is preferable that the fine particles and the coating films exist uniformly even between particles constituting the lithium nickel-containing composite oxide.

As described above, in the positive electrode active material of the present invention, the fine particles of the W- and Li-containing compound are mixed with the coating films of the W- and Li-containing compound to be formed on at least a surface of primary particles. Thus, a high effect with respect to battery characteristics is obtained. By such a configuration, the contact area with the electrolyte becomes sufficient so that the lithium-ion conductivity can be effectively improved. Thus, it is possible to improve a charge and discharge capacity and to more effectively reduce reaction resistance.

The properties of primary particles including the fine particles and the coating films of the W- and Li-containing compound can be determined, for example, by surface observation and cross-sectional observation by a scanning electron microscope (SEM) such as a field emission type scanning electron microscope (FE-SEM), cross-sectional element mapping by EDX analysis using a scanning transmission electron microscope (STEM), cross-sectional observation by a transmission electron microscope (TEM), and the like. It can be confirmed by these methods that regarding the positive electrode active material of the present invention, fine particles and coating films of the W- and Li-containing compound are formed on a surface of primary particles constituting composite oxide.

In the present invention, the W- and Li-containing compound configuring the fine particles and the coating films of the W- and Li-containing compound is preferably lithium tungstate. The lithium tungstate is preferably at least one form selected from Li₂WO₄, Li₄WO₅, Li₆WO₆, Li₂W₄O₁₃, Li₂W₂O₇, Li₆W₂O₉, Li₂W₂O₇, Li₂W₅O₁₆, Li₉W₁₉O₅₅, Li₃W₁₀O₃₀, Li₁₈W₅O₁₅, and hydrates thereof. Furthermore, the lithium tungstate more preferably includes 7Li₂WO₄·4H₂O. By forming such lithium tungstate, lithium-ion conductivity is further enhanced, and the effect of reducing the reaction resistance is further increased.

The number of atoms of W contained in the W- and Li-containing compound is preferably 0.05 atomic% or more and 3.0 atomic% or less, more preferably 0.05 atomic% or more and 1.0 atomic% or less, and further preferably 0.05 atomic% or more and 0.5 atomic% or less, with respect to the total number of atoms of metals other than Li, which are contained in particles constituting the positive electrode active material, that is, Ni, Mn, Co, and the additive element M. Thereby, both of a high charge and discharge capacity and output characteristics can be achieved.

When the W amount is less than 0.05 atomic%, the effect of improving output characteristics is not sufficiently obtained in some cases. When the W amount exceeds 3.0 atomic%, the amount of coverage by the fine particles and the coating films of the W- and Li-containing compound is increased too much to decrease the BET specific surface area of the positive electrode active material and increase the bulk resistance of the electrode, so that a sufficient effect of reducing the reaction resistance may not be obtained.

Furthermore, the amount of Li contained in the fine particles and the coating films of the W- and Li-containing compound is not particularly limited, and as long as Li is contained, the effect of improving lithium-ion conductivity is obtained. However, this Li amount is preferably an amount sufficient enough to form lithium tungstate.

### (3) Composition

The positive electrode active material of the present invention comprises a lithium nickel manganese cobalt-containing composite oxide having a ternary-system composition containing at least nickel, manganese, and cobalt, and the composition thereof is not limited as long as it has a structure in which the fine particles and the coating films of the aforementioned W- and Li-containing compound exist on at least a part of a surface of at least a part of the primary particles constituting the secondary particles.

However, when the W amount in the fine particles and the coating films of the W- and Li-containing compound is 0.05 atomic% or more and 3.0 atomic% or less, it is preferable that the positive electrode active material of the present invention is formed of a composite oxide that is represented by General Formula (A): Li₁₊ᵤNiₓMn_{y}Co_{z}WₛMₜO₂, wherein -0.05 ≤ u ≤ 0.50, x + y + z + s + t = 1, 0.3 ≤ x ≤ 0.7, 0.15 ≤ y ≤ 0.4, 0.15 ≤ z ≤ 0.4, 0.0005 ≤ s ≤ 0.03, 0 ≤ t ≤ 0.1, M is one or more additive elements selected from Mg, Al, Si, Ca, Ti, V, Cr, Zr, Nb, Mo, Hf, Ta, and W, and has a crystal structure of a hexagonal layered rock-salt structure. Note that, W can be contained as the additive element M in the inside of the composite oxide, but in this case, the W amount (s in the composition formula) does not include the amount of W contained as the additive element M.

The value of u that indicates a surplus amount of lithium (Li) is preferably -0.05 or more and 0.50 or less, more preferably 0 or more and 0.50 or less, and further preferably 0 or more and 0.35 or less. By regulating the value of u to be within the above range, it is possible to improve the output characteristics and the battery capacity of the secondary battery that uses this positive electrode active material as the positive electrode material. On the other hand, when the value of u is less than -0.05, the positive electrode resistance of the secondary battery becomes large, so that the output characteristics cannot be improved. On the other hand, when the value of u exceeds 0.50, not only does the initial discharge capacity decrease, but also the positive electrode resistance becomes large.

Nickel (Ni) is an element that contributes to increasing the electric potential and capacity of the secondary battery, and the value of x that indicates the content of nickel is preferably 0.3 or more and 0.7 or less, more preferably 0.4 or more and 0.65 or less, and further preferably 0.5 or more and 0.6 or less, from the viewpoint of obtaining a ternary-system positive electrode active material having a high nickel ratio. When the value of x is less than 0.3, the energy density of the secondary battery cannot be sufficiently improved. On the other hand, when the value of x exceeds 0.7, the content of other elements decreases, and the effect as the ternary-system positive electrode active material cannot be obtained.

Manganese (Mn) is an element that contributes to the improvement of thermal stability, and the value of y that indicates the content of manganese is preferably 0.15 or more and 0.4 or less more preferably 0.2 or more and 0.35 or less. When the value of y is less than 0.15, the thermal stability of the secondary battery using this positive electrode active material cannot be improved. On the other hand, when the value of y exceeds 0.4, Mn elutes from the positive electrode active material during high-temperature operation, and the charge and discharge cycle characteristics deteriorate.

Cobalt (Co) is an element that contributes to the improvement of charge and discharge cycle characteristics, and the value of z that indicates the content of cobalt is preferably 0.15 or more and 0.4 or less more preferably 0.2 or more and 0.35 or less. When the value of z exceeds 0.4, the initial discharge capacity of the secondary battery greatly decreases.

In the positive electrode active material of the present invention, in order to further improve the durability and output characteristics of the secondary battery, the additive element M may be contained in addition to the aforementioned metal elements. As such an additive element M, it is possible to use one or more kinds selected from magnesium (Mg), aluminum (Al), silicon (Si), calcium (Ca), titanium (Ti), vanadium (V), chromium (Cr), zirconium (Zr), niobium (Nb), molybdenum (Mo), hafnium (Hf), tantalum (Ta), and tungsten (W).

The value of t indicating the content of the additive element M is preferably 0 or more and 0.1 or less and more preferably 0.001 or more and 0.05 or less. When the value of t exceeds 0.1, a metal element that contributes to a Redox reaction decreases, and thus the battery capacity of the secondary battery decreases.

Such an additive element M may be uniformly dispersed inside the particles of the composite oxide or may be coated on the surface of the particles of the composite oxide. Further, the additive element M may be coated on the surface of the particles after being uniformly dispersed inside the particles. In any case, it is necessary to control the content of the additive element M to be within the above range.

### (4) Average particle size MV

The positive electrode active material of the present invention is adjusted so that the average particle size MV is 3 µm or more and 10 µm or less, preferably 4 µm or more and 9 µm or less, and more preferably 4 µm or more and 8 µm or less. When the average particle size of the positive electrode active material is within such a range, not only does it become possible to increase the battery capacity per unit volume of the secondary battery using this positive electrode active material, but it is also possible to improve the safety and output characteristics. When the average particle size MV is less than 3 µm, the filling capability of this positive electrode active material decreases and the battery capacity per unit volume cannot be increased. Moreover, when the average particle size MV exceeds 10 µm, the reaction surface area of this positive electrode active material decreases and the interface with the non-aqueous electrolyte is decreased, and thus it becomes difficult to improve output characteristics.

The average particle size MV of the positive electrode active material means the volume-based average particle size (Mean Volume Diameter), and for example, can be obtained from the volume integrated value that is measured by a laser diffraction scattering type particle size analyzer.

### (5) Particle size distribution

The positive electrode active material of the present invention comprises secondary particles having a very narrow particle size distribution for which [(d90 - d10)/average particle size MV], which is an index indicating the spread of particle size distribution, is 0.70 or less, preferably 0.60 or less, and more preferably 0.55 or less. For such a positive electrode active material, the percentage of fine particles and coarse particles is small, so that the secondary battery using this positive electrode active material is excellent in safety, cycle characteristics, and output characteristics.

On the other hand, when [(d90 - d10)/average particle size MV] exceeds 0.70, the percentage of fine particles and coarse particles in the positive electrode active material increases. For example, when the percentage of fine particles is large, the secondary battery is likely to generate heat due to localized reaction of fine particles, safety deteriorates, and the fine particles selectively deteriorate, so that cycle characteristics deteriorate. Furthermore, when the proportion of coarse particles is large, it is not possible to sufficiently secure the reaction surface area of the positive electrode active material with the non-aqueous electrolyte, and thus output characteristics deteriorate.

When presuming that production will be on an industrial scale, using a positive electrode active material having an excessively small [(d90 - d10)/average particle size MV] is not practical. Therefore, in consideration of cost and productivity, the lower limit of [(d90 - d10)/average particle size MV] is preferably set to about 0.25.

d10 means a particle size when the number of particles having each particle size is cumulatively summed up from the number of particles having the smallest particle size and the cumulative volume reaches 10% of the total volume of all particles (when the total volume is regarded as 100% and the cumulative curve of the particle size distribution is obtained, d10 is a particle size when this cumulative curve reaches 10%), and d90 means a particle size when the number of particles having each particle size are similarly cumulatively summed up from the number of particles having the smallest particle size and the cumulative volume reaches 90% of the total volume of all particles (when the total volume is regarded as 100% and the cumulative curve of the particle size distribution is obtained, d90 is a particle size when this cumulative curve reaches 90%). The d10 and d90 can be obtained from, for example, a volume integration value measured by a laser diffraction scattering type particle size analyzer, similarly to the average particle size MV.

### (6) Primary particles

In the positive electrode active material of the present invention, the primary particles configuring the outer shell section and the aggregated section are formed to have a size, that is, an average particle size of 0.02 µm or more and 0.5 µm or less. The size of the primary particles is obtained in such a manner that secondary particles are embedded in a resin or the like and subjected to cross sectional polishing process or the like so as to enable the cross-sectional observation, then the cross-section thereof is observed using an SEM such as an FE-SEM, the maximum outer diameters (major-axis diameters) of ten or more primary particles existing in the cross-section of the secondary particle are measured, and an average value thereof is determined. When the average particle size of the primary particles is less than 0.02 µm, the primary particles become fragile, and thus a problem may arise in that sufficient battery performance is not obtainable. On the other hand, when the average particle size of the primary particles is more than 0.5 µm, a diffusion length in particle solid becomes longer, and thus a problem may arise in that sufficient battery performance is not obtainable. In the positive electrode active material of the present invention, each one of the primary particles has a substantially uniform composition.

### (7) Outer shell section

The outer shell section constituting the secondary particles is configured by the aggregate of the primary particles. The thickness of the outer shell section is preferably 0.1 µm or more and 1.5 µm or less. When the thickness of the outer shell section is less than 0.1 µm, the strength of the secondary particle is not sufficiently secured. On the other hand, when the thickness of the outer shell section exceeds 1.5 µm, problems may arise in that a space section and an aggregated section that have an appropriate size are not formed inside of the secondary particles and in that the non-aqueous electrolyte is not sufficiently permeated into the inside of the secondary particles. The thickness of the outer shell section is preferably 0.1 µm or more and 1.2 µm or less and more preferably 0.12 µm or more and 1.0 µm or less.

### (8) Tap density

The capacity enlargement of the secondary battery in order to increase the amount of time that a portable electronic device can be used or increase the distance that an electric car can travel is becoming an important task. Meanwhile, from the problem of packing or electron conductivity of the entire battery, there is a need to make the thickness of the electrodes of the secondary battery about several µm thick. Therefore, not only is it necessary to use a positive electrode active material having a high capacity as the positive electrode active material, but it is also necessary to increase the filling capability of the positive electrode active material and to increase the overall capacity of the secondary battery.

From such viewpoints, in the positive electrode active material of the present invention, the tap density, which is an index of the filling capability (sphericity of the secondary particles constituting the positive electrode active material) is preferably 1.0 g/cm³ or more and more preferably 1.1 g/cm³ or more and 1.8 g/cm³ or less, even when the positive electrode active material has a ternary-system composition containing at least nickel, manganese, and cobalt and has a porous structure. When the tap density is less than 1.0 g/cm³, the filling capability is low even if the BET specific surface area is increased, and thus the overall battery capacity of the secondary battery cannot be sufficiently improved in some cases. Meanwhile, the upper limit of the tap density is not particularly limited, but the upper limit under normal production conditions is about 1.8 g/cm³ in the case of the composition and the particle structure of the present invention. The tap density is preferably 1.2 g/cm³ or more and more preferably 1.4 g/cm³ or more.

The tap density is the bulk density after tapping a powder sample that is collected in a vessel 100 times according to JIS Z-2504, and can be measured using a shaking specific gravity measuring device.

### (9) BET specific surface area

The positive electrode active material of the present invention is characterized in that the specific surface area is improved by the presence of the space section formed inside the secondary particle. As the specific surface area of the positive electrode active material in the present invention, for example, a BET specific surface area measured by a BET method using nitrogen gas adsorption is used. In the positive electrode active material of the present invention, the BET specific surface area is preferably as large as possible as long as the aforementioned structure of the secondary particle is maintained. The reason for this is that, as the BET specific surface area increases, the contact area with the non-aqueous electrolyte becomes larger, the output characteristics of the secondary battery using this positive electrode active material can be considerably improved. Specifically, the BET specific surface area of the positive electrode active material of the present invention is preferably 2.0 m²/g or more and 5.0 m²/g or less. When the specific surface area of the positive electrode active material is less than 2.0 m²/g, in the case of constructing a secondary battery using this positive electrode active material as a positive electrode material, the reaction surface area with the non-aqueous electrolyte cannot be sufficiently secured, and it becomes difficult to sufficiently improve output characteristics. The BET specific surface area is more preferably 2.5 m²/g or more and 4.5 m²/g or less and further preferably 3.0 m²/g or more and 4.0 m²/g or less.

### (10) Porosity

The positive electrode active material of the present invention has a porosity, which is an index for the existence ratio of the space section formed inside the secondary particle and is measured by cross-sectional observation of the secondary particle, of 10% or more and 50% or less. By controlling the porosity of the secondary particle within this range, both of a larger specific surface area and a higher tap density are achieved, and a high-density positive electrode can be obtained while the contact area with the electrolyte is ensured. Thereby, a secondary battery having a high output density per volume is obtained. The porosity of the secondary particle is preferably 15% or more and 45% and more preferably 20% or more and 40% or less.

The porosity of the secondary particles can be measured by observing any cross-sections of the secondary particles using a scanning electron microscope (SEM) and then analyzing an image thereof. Specifically, the porosity can be calculated as follows. A plurality of secondary particles are embedded in a resin or the like, a cross-section sample is prepared by cross sectional polishing process or the like so as to enable the cross-sectional observation of the secondary particles with a scanning electron microscope, then, regarding pores in arbitrary 20 or more secondary particles, void parts (space section) in the secondary particles are detected to be black and dense parts in the contour of the secondary particles are detected to be white using image analysis software (such as WinRoof 6.1.1), the total area of the black portions and the white portions in the 20 or more secondary particles is measured, and the area ratio [black portions/(black portions + white portions)] is calculated. The porosity of the secondary particles after coating is not affected by the presence of fine particles and the coating films of the W and Li compound, and is equal to the porosity of the secondary particles (base material) before coating.

### 2. Method for producing positive electrode active material for lithium-ion secondary battery

A second aspect of the present invention relates to a method for producing a positive electrode active material for a lithium-ion secondary battery, that is, a W- and Li-containing compound-coated lithium nickel manganese cobalt-containing composite oxide in which fine particles and coating films of a W- and Li-containing compound exist on at least a part of a surface of at least a part of the primary particles constituting the secondary particles.

In the method for producing a positive electrode active material for a lithium-ion secondary battery of the present invention, a ternary-system composite oxide with a porous structure having the aforementioned structure, except for fine particles and coating films of the W- and Li-containing compound existing, is used as a base material. That is, used is, as a base material, a ternary-system composite oxide configured by secondary particle formed with a plurality of primary particles being aggregated, in which the secondary particle has a porous structure that includes an outer shell section formed with the aggregated primary particles, an aggregated section existing inside the outer shell section, formed with the aggregated primary particles, and electrically connected to the outer shell section, and a space section existing in a dispersed manner in the aggregated section.

Particularly, the method for producing a positive electrode active material for a lithium-ion secondary battery of the present invention is characterized by including:
a dry mixing process of mixing a tungsten compound in an amount of 0.1% by mass or more and 5% by mass or less with respect to the total mass of the composite oxide to obtain a mixture;
a water spray mixing process of spraying water to the mixture in an amount of 1% by mass or more and 30% by mass or less with respect to the total mass of the mixture while the mixture is stirred, to mix the mixture;
a heat treatment process of subjecting the mixture obtained after the water spray mixing process to a heat treatment at a temperature of 500°C or lower; and
a drying process of drying the mixture obtained after the heat treatment process at a temperature of 500°C or lower to obtain a W- and Li-containing compound-coated lithium nickel manganese cobalt-containing composite oxide in which fine particles of a W- and Li-containing compound exist on a surface of the primary particles,
in which in at least drying process, the drying is performed using a vacuum dry mixing apparatus in a vacuum atmosphere.

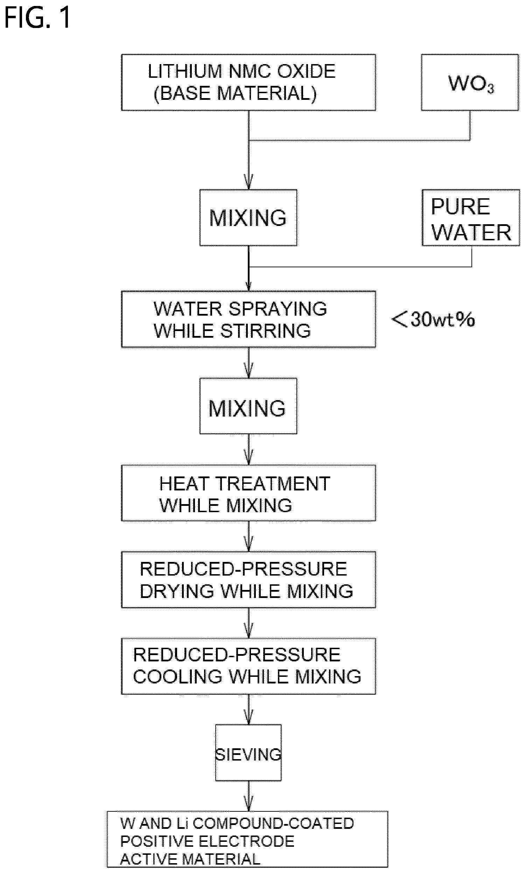

Hereinafter, the method for producing the positive electrode active material for a lithium-ion secondary battery of the present invention will be described with reference to Fig. 1.

### (1) Dry mixing process

The dry mixing process is a process of dry mixing composite oxide and a tungsten compound to disperse the tungsten compound in the surface of primary particles of the composite oxide. By dry mixing these powders before mixing by water spraying, the tungsten compound can be more uniformly dispersed in the composite oxide.

The added amount of the tungsten compound is set to preferably 0.1% by mass or more and 5% by mass or less with respect to the total mass of the composite oxide. Thereby, the W amount that is dispersed in the surface of the composite oxide can be set to 0.05 atomic% or more and 3.0 atomic% or less with respect to metals other than lithium that is included in the composite oxide, that is, with respect to the total number of atoms of Ni, Mn, Co, and the additive element M.

That is, when the added amount of the tungsten compound is less than 0.1% by mass with respect to the total mass of the composite oxide, in a positive electrode active material to be finally obtained, fine particles of the W- and Li-containing compound becomes too finer or coating films become too thinner, so that sufficient lithium-ion conductivity may not be obtained or formation of coating by the fine particles or the coating films may become non-uniform. Accordingly, the effect of reducing reaction resistance is not sufficiently obtained in some cases. When the added amount exceeds 5% by mass, in a positive electrode active material to be finally obtained, the amount of coverage by the fine particles and the coating films of the W- and Li-containing compound is increased too much to decrease the BET specific surface area of the positive electrode active material and increase the bulk resistance of the electrode, so that a sufficient effect of reducing the reaction resistance is not obtained in some cases.

The added amount of the tungsten compound is more preferably 0.2% by mass or more and 4% by mass or less and further preferably 0.2% by mass or more and 2% by mass or less with respect to the total mass of the composite oxide. Thereby, the W amount that is dispersed in the surface of the composite oxide can be set to 0.05 atomic% or more and 1.0 atomic% or less and further 0.05 atomic% or more and 0.5 atomic% or less.

By adding the tungsten compound in this range, the fine particles and the coating films of the W- and Li-containing compound can be more uniformly formed on the surface of the primary particles of the positive electrode active material, and the conduction path of Li is formed in the interface with the electrolyte, so that the reaction resistance of the positive electrode active material can be further reduced.

The tungsten compound may be either a form of an alkaline solution obtained by dissolving the tungsten compound (hereinafter, referred to as "alkaline solution (W)") or a form of the tungsten compound.

When the tungsten compound is added as the alkaline solution (W), the tungsten compound may be one which can be dissolved in the alkaline solution, and a tungsten compound readily-soluble to alkali, such as tungsten oxide, lithium tungstate, or ammonium tungstate, is preferably used.

As the alkali that is used for the alkaline solution (W), in order to obtain a high charge and discharge capacity, a general alkaline solution that does not contain impurities harmful to the positive electrode active material, for example, ammonia or lithium hydroxide can be used. For enabling an amount of Li sufficient for forming the W- and Li-containing compound to be supplied from the excessive Li and the alkaline solution (W) and from the viewpoint of not inhibiting the intercalation of Li, lithium hydroxide is preferably used.

On the other hand, when the tungsten compound is added in the form of the tungsten compound, as the tungsten compound, a tungsten compound soluble to alkali is preferably used, a tungsten compound containing lithium is more preferably used, and lithium tungstate is further preferably used. As the lithium tungstate, at least one kind selected from Li₂WO₄, Li₄WO₅, and Li₆W₂O₉ can be used.

In any cases, at addition of the tungsten compound, it is necessary to select a processing condition thereof and an addition means so that the W amount in the fine particles and the coating films of the W- and Li-containing compound, such as lithium tungstate, which are formed on the surface of particles constituting the positive electrode active material, is within the range of the present invention. Note that, these processing conditions and addition means are well known, and thus detailed description will be omitted herein.

It is preferable that the dry mixing process is performed in a time of 5 minutes or longer and 50 minutes or shorter while stirring is performed at a peripheral speed of 5 m/sec or more and 30 m/sec or less. When any one of the peripheral speed of stirring and the process time in the dry mixing process is less than the lower limit, there is a possibility that the tungsten compound cannot be sufficiently and uniformly dispersed in the surface of primary particles of the composite oxide. On the other hand, when any one of the peripheral speed of stirring and the process time in the dry mixing process is more than the upper limit, there is a possibility that the positive electrode active material is crushed to decrease the particle size too much.

The peripheral speed of stirring in the dry mixing process is set to more preferably 6 m/sec or more and 25 m/sec or less. The process time of the dry mixing process is set to more preferably 10 minutes or longer and 30 minutes or shorter.

In the dry mixing process, a known mixing apparatus can be used as long as mixing can be performed while composite hydroxide and a tungsten compound are stirred, but even in this process, from the viewpoint of continuity of the processes, a vacuum dry mixing apparatus described below is preferably used.

### (2) Water spray mixing process

The water spray mixing process is a process of spraying water with respect to the obtained mixture of composite oxide and the tungsten compound while the mixture is stirred, to mix the mixture. Thereby, a neutralization reaction between excessive lithium, such as lithium hydroxide, released from the composite oxide and existing on the surface of the primary particles of the composite oxide and the tungsten compound such as tungsten oxide can be allowed to proceed more uniformly in the presence of water.

As water, pure water is preferably used. Excessive lithium such as unreacted lithium compound existing in the composite oxide or excess lithium existing in crystal is dissolved in water in the mixture, and a tungsten compound such as tungsten oxide mixed is dissolved in water in the mixture.

The amount (total amount) of water to be sprayed is set to preferably 1% by mass or more and 30% by mass or less, more preferably 4% by mass or more and 20% by mass or less, and further preferably 5% by mass or more and 15% by mass or less, with respect to the whole composite oxide. When the amount of water to be sprayed is less than 1% by mass, the effect obtained by water addition is not sufficiently exhibited, and the tungsten compound may remain. On the other hand, when the amount of water to be sprayed exceeds 30% by mass, the lithium amount eluting from the composite oxide serving as a base material to water (amount of excessive lithium) over the procedures from water spraying to drying becomes too large. Thus, the content of lithium in the positive electrode active material is decreased, and the effect of reducing resistance is not sufficiently obtained in some cases. Furthermore, when the amount of water to be sprayed exceeds 30% by mass, it is necessary to increase the drying time required for decreasing the moisture content in the positive electrode active material thus obtained, and there is a possibility that productivity is decreased. Furthermore, there is a possibility that the mixture is aggregated, the viscosity thereof rises to increase the resistance when stirring, and thus the positive electrode active material may be crushed.

The state of water to be sprayed is preferably a mist state with an average particle size of 300 µm or less. When water in a mist state is added, the neutralization reaction between excessive lithium and the tungsten compound can be more uniformly on the surface of primary particles of composite oxide, and the particle size of the fine particles and the average film thickness of the coating films that contain W and Li that are formed on the surface of primary particles constituting the positive electrode active material can be adjusted in a preferable range. When the average particle size of water to be sprayed is larger than 300 µm, the eluted amount of lithium is different between the secondary particles to which moisture is directly supplied by spraying and the secondary particles to which moisture is supplied by stirring after spraying, and thus heterogeneity may occur in the reaction.

Note that, in order to form the fine particles and the coating films of the W- and Li-containing compound on the surface of primary particles, the moisture content of powder after water spray mixing and before drying is set to preferably 3.0% by mass or more and 10% by mass or less and more preferably 3.0% by mass or more and less than 6.5% by mass. By regulating this moisture content within the above range, the fine particles and the coating films of the W- and Li-containing compound can be formed on the surface of primary particles in a state where the fine particles and the coating films are mixed. When the moisture content of powder is 6.5% by mass or more, there is a tendency that the coating films of the W- and Li-containing compound are formed much more than the fine particles thereof on the surface of primary particles, and when the moisture content of powder exceeds 10% by mass, coarsening of the fine particles and thickening of the coating films of the W- and Li-containing compound occurs in some cases.

The moisture content of powder after water spray mixing and before drying is determined from the mass of powder after water spray mixing and before drying and the mass of the powder obtained after being dried at 180°C for 3 hours by equation: "Moisture content = (Mass of powder after water spray mixing and before drying - Mass of powder after drying) / (Mass of powder after water spray mixing and before drying)".

Particularly, in the method for producing a positive electrode active material for a lithium-ion secondary battery of the present invention, it is preferable that in the water spray mixing process, the water spraying is performed using a vacuum dry mixing apparatus at a water spray velocity of 0.01 ml/min or more and 0.1 ml/min or less per 1 g of the mixture while the stirring is performed at a peripheral speed of 4 m/sec or more and 30 m/sec or less, and after the water spraying, the mixing is continued in a time of 5 minutes or longer and 120 minutes or shorter while the stirring is performed at a peripheral speed of 4 m/sec or more and 30 m/sec or less.

In the water spray mixing process, in order to shorten the spraying time, water spraying can also be performed using a plurality of nozzles. In this case, the water spray velocity of each of the nozzles is set to 0.01 ml/min or more and 0.1 ml/min or less in total of all of the nozzles. The water spray velocity per one nozzle is set to preferably 0.005 ml/min or more and 0.05 ml/min or less.

By performing such processing, the tungsten compound can be allowed to exist sufficiently and uniformly on the surface of primary particles of the composite oxide, and the moisture content can also be appropriately regulated. Thus, coating is formed by the fine particles, which are dispersed more finely and more uniformly, of the W- and Li-containing compound and the coating film, which is formed more uniformly to have a more appropriate thickness, of the W- and Li-containing compound.

When any one of the peripheral speed of stirring and the water spray velocity in the water spray mixing process, particularly, in a process of continuously mixing the mixture with water after water spraying is less than the lower limit, there is a possibility that the tungsten compound cannot be dispersed sufficiently and uniformly on the surface of primary particles of composite oxide to the extent where the particle size of fine particles of the W- and Li-containing compound becomes 5 nm or more and 400 nm or less or to the extent where the average film thickness of the coating films of the W- and Li-containing compound becomes 1 nm or more and 200 nm or less, or there is a possibility that the reaction with lithium is insufficient so that a large amount of the tungsten compound such as tungsten oxide remains. On the other hand, when any one of the peripheral speed of stirring and the water spray velocity in the water spray mixing process is more than the upper limit, the positive electrode active material is crushed and water does not uniformly reach the mixture. Thus, there is a possibility that a non-uniform reaction occurs and segregation of fine particles and coating films of the W- and Li-containing compound occurs.

In the water spray mixing process, the peripheral speed of stirring in water spraying is set to preferably 6 m/sec or more and 24 m/sec or less and more preferably 6 m/sec or more and 20 m/sec or less.

The water spray velocity is set to preferably 0.015 ml/min or more and 0.07 ml/min or less and more preferably 0.02 ml/min or more and 0.06 ml/min or less. The water spray velocity when water spraying is performed using a plurality of nozzles is set to preferably 0.01 ml/min or more and 0.08 ml/min or less and more preferably 0.015 ml/min or more and 0.07 ml/min in total of all of the nozzles. The water spray velocity of each of the nozzles is set to preferably 0.007 ml/min or more and 0.03 ml/min or less.

The process time for performing water spraying is defined by the amount of water to be sprayed and the water spray velocity, and this process time is set to preferably 5 minutes or longer and 30 minutes or shorter and more preferably 10 minutes or longer and 25 minutes or shorter.

Furthermore, the peripheral speed of stirring in mixing continued thereafter is set to preferably 6 m/sec or more and 25 m/sec or less and more preferably 6 m/sec or more and 20 m/sec or less. The process time for continuing the mixing is more preferably 5 minutes or longer and 90 minutes or shorter and further preferably 10 minutes or longer and 45 minutes or shorter.

Also in the water spray mixing process, a known mixing apparatus can be used as long as water spraying and mixing can be performed while composite hydroxide and a tungsten compound are stirred, but even in this process, from the viewpoint of continuity of the processes, a vacuum dry mixing apparatus described below is preferably used.

### (3) Heat treatment process

The heat treatment process is a process of subjecting a mixture obtained by mixing composite oxide, a tungsten compound, and water to a heat treatment at a temperature of 500°C or lower before reduced-pressure drying described below. It is preferable that in the heat treatment process, the heat treatment is performed in the atmosphere at a temperature of 40°C or higher and 200°C or lower in a time of 15 minutes or longer and 120 minutes or shorter while the mixture is stirred at a peripheral speed of 4 m/sec or more and 30 m/sec or less. By performing such processing, the reduced-pressure drying can be performed after water in the tank is evaporated, and thus water in the positive electrode active material can be more efficiently removed.

The peripheral speed of stirring during the heat treatment is more preferably 6 m/sec or more and 25 m/sec or less. The heat treatment temperature is more preferably 80°C or higher and 120°C or lower. The process time for performing the heat treatment is more preferably 30 minutes or longer and 90 minutes or shorter.

In the heat treatment process, a known heat treatment apparatus can also be used, but from the viewpoint of treatment efficiency, a vacuum dry mixing apparatus that is used in the drying process is preferably used.

### (4) Drying process

The drying process is a process of drying a mixture obtained by mixing composite oxide, a tungsten compound, and water to obtain a positive electrode active material formed of a W- and Li-containing compound-coated composite oxide. The W- and Li-containing compound-coated composite oxide is basically formed of a W- and Li-containing compound, such as lithium tungstate, formed by reacting a tungsten compound such as tungsten oxide with excessive lithium in the composite oxide serving as a base material in the presence of water.

Specifically, in the drying process, the mixture was subjected to a heat treatment at a temperature of 500°C or lower to obtain the W- and Li-containing compound-coated lithium nickel manganese cobalt-containing composite oxide in which fine particles and coating films of a W- and Li-containing compound exist on the surface of the primary particles.

The temperature of the drying process is not particularly limited as long as the moisture content is sufficiently reduced, but the mixture is preferably dried at a temperature of 500°C or lower. When the drying temperature exceeds 500°C, lithium is further released from inside the primary particles so that sufficient slurry stability is not obtainable. The lower limit of the drying temperature is not particularly limited, but is preferably 70°C or higher from the viewpoint of efficiency. The temperature of the drying process is more preferably a temperature of 70°C or higher and 200°C or lower.

Particularly, in the method for producing a positive electrode active material for a lithium-ion secondary battery of the present invention, it is characterized in that the drying is performed using a vacuum dry mixing apparatus in a vacuum atmosphere. It is preferable that the reduced-pressure drying is performed in a vacuum atmosphere at a temperature of 70°C or higher and 200°C or lower in a time of 60 minutes or longer and 240 minutes or shorter while the mixture is stirred at a peripheral speed of 4 m/sec or more and 30 m/sec or less.

By performing such processing, it is possible to sufficiently and uniformly react the tungsten compound with the surface of the primary particles constituting the secondary particles of the composite oxide, and due to friction between secondary particles constituting the positive electrode active material which is generated by stirring during reduced-pressure drying, the W- and Li-containing compound-coated composite oxide is formed, in which the fine particles of the W- and Li-containing compound are more finely and more uniformly dispersed and the coating film of the W- and Li-containing compound are thinly and uniformly formed.

When any of the peripheral speed of stirring, the treatment temperature, and the process time when reduced-pressure drying is less than the lower limit, there is a possibility that the tungsten compound cannot be sufficiently and uniformly reacted with the surface of primary particles of the composite oxide. Furthermore, when stirring and mixing are not performed during reduced-pressure drying, there is a possibility that a variation in the degree of evaporation of water adhering to the positive electrode active material occurs so that segregation of fine particles and coating films of the W- and Li-containing compound are likely to occur in a portion in which water is difficult to evaporate, and thus the particle size of the fine particles of the W- and Li-containing compound is locally increased or the average film thickness of the coating films of the W- and Li-containing compound is increased too much.

Meanwhile, when any of the peripheral speed of stirring, the treatment temperature, and the process time in the drying process is more than the upper limit, there is a possibility that secondary particles constituting the positive electrode active material is crushed to generate particles having a small particle size, so that the particle size distribution of the positive electrode active material will deteriorate.

The peripheral speed of stirring when reduced-pressure drying is more preferably 6 m/sec or more and 25 m/sec or less and further preferably 6 m/sec or more and 20 m/sec or less.

The treatment temperature when reduced-pressure drying is preferably in the range of 75°C or higher and 180°C or lower and more preferably 80°C or higher and 160°C or lower.

The process time when reduced-pressure drying is more preferably 80 minutes or longer and 200 minutes or shorter and further preferably 90 minutes or longer and 150 minutes or shorter.

Furthermore, the pressure of the vacuum atmosphere when reduced-pressure drying is 0.5 MPa or less, preferably 0.1 MPa or less, and more preferably 0.05 MPa or less. If the pressure when reduced-pressure drying is higher than 0.5 MPa, there is a concern that the moisture content of the mixture in the above process time range will not be sufficiently decreased.

### (5) Cooling process

It is preferable that reduced-pressure cooling of cooling the mixture to 25°C in a time of 60 minutes or longer and 240 minutes or shorter is performed while stirring is performed using a vacuum dry mixing apparatus at a peripheral speed of 1 m/sec or more and 20 m/sec or less, in a vacuum atmosphere, after the reduced-pressure drying in the drying process. By performing such processing, the moisture content of the mixture can be suppressed to a minimum.

The peripheral speed when reduced-pressure cooling in the vacuum atmosphere is more preferably 2 m/sec or more and 15 m/sec or less. The process time for performing this reduced-pressure cooling is more preferably 90 minutes or longer and 150 minutes or shorter.

### (6) Vacuum dry mixing apparatus

In the method for producing a positive electrode active material for a lithium-ion secondary battery of the present invention, a vacuum dry mixing apparatus is preferably used as an apparatus for mixing the mixture.

As for the vacuum dry mixing apparatus, an arbitrary apparatus can be applied as long as it is an apparatus in which composite oxide and a tungsten compound can be mixed, water spraying can be performed, and pressure can be reduced to a vacuum atmosphere of 0.1 MPa or less.

As such a vacuum drying apparatus, a Henschel mixer, a vacuum mixing dryer, a vibration dryer, and the like can be exemplified.

In the present invention, a ternary-system composite oxide with a porous structure having the aforementioned structure that is a base material, excluding fine particles and coating films of the W- and Li-containing compound existing, is used as a base material. That is, a ternary-system composite oxide is configured by secondary particle formed with a plurality of primary particles being aggregated, in which the secondary particle has a porous structure that includes an outer shell section formed with the aggregated primary particles, an aggregated section existing inside the outer shell section, formed with the aggregated primary particles, and electrically connected to the outer shell section, and a space section existing in a dispersed manner in the aggregated section. The ternary-system composite oxide has an appropriate strength, and a hardness that is not excessive with respect to the use of a vacuum dry mixing apparatus. Thus, the vacuum dry mixing apparatus can be continuously applied in the water spray mixing process, the heat treatment process, and the drying process. The vacuum dry mixing apparatus can also be continuously used in all of the dry mixing process, the water spray mixing process, and the heat treatment process, the drying process, and the cooling process.

By using the vacuum dry mixing apparatus in this way, both of water spray mixing and drying of the mixture are continuously performed while mixing to sufficiently stir the mixture. Thus, the tungsten compound can be reacted sufficiently and uniformly on the surface of primary particles of the composite oxide, and the moisture content can also be appropriately regulated. Accordingly, coating can be formed by the fine particles, which are dispersed more finely and more uniformly, of the W- and Li-containing compound and the coating film, which is formed more uniformly, of the W- and Li-containing compound. Furthermore, by performing the mixing of the mixture using the vacuum dry mixing apparatus under the same condition, a variation in quality of products each lot can be suppressed. Further, by using the vacuum dry mixing apparatus, mixing by a machine is possible during water spraying, and thus mixing efficiency is improved so that the tungsten compound can be uniformly reacted. Furthermore, the vacuum dry mixing apparatus is an apparatus in which a mixer and a dryer is integrated and an apparatus capable of performing mixing during drying.

In the present invention, by utilizing these two features, it is possible to obtain a W- and Li-containing compound-coated lithium nickel manganese cobalt-containing composite oxide which is coated with fine particles and coating films of a W- and Li-containing compound which are in a highly dispersed state. Thereby, the dispersibility of the fine particles of the W- and Li-containing compound and the uniformity of the coating films of the W- and Li-containing compound after coating, which were low due to the fact that stirring is not performed during drying in a conventional production method, are drastically improved.

In the method for producing a positive electrode active material for a lithium-ion secondary battery of the present invention, by sieving the powder that is finally obtained after the cooling process, it is possible to finally obtain a positive electrode active material formed of a W- and Li-containing compound-coated lithium nickel manganese cobalt-containing composite oxide of which the surface is coated with fine particles and coating films of a W- and Li-containing compound.

### (7) Difference in average particle size MV of secondary particles before and after being coated with W- and Li-containing compound

By applying the production method of the present invention, the ratio of the average particle size MV of the secondary particles constituting the positive electrode active material after being coated with the W- and Li-containing compound to the average particle size MV of the secondary particles constituting the composite oxide before being coated with the W- and Li-containing compound is 90% or more. This ratio is preferably 95% or more.

In the present invention, since the strength of the secondary particles of a base material is high when the W- and Li-containing compound is formed in the base material, the secondary particles of the base material is not almost crushed in the dry mixing process, the water spray mixing process, and the drying process using a vacuum dry mixing apparatus. Therefore, the average particle size MV of the secondary particles of the base material, [(d90 - d10)/average particle size MV], which is an index indicating the spread of particle size distribution of the secondary particles, and the tap density are substantially inherited from the base material, and particularly, a decrease in the average particle size MV is suppressed.

### (8) Method for producing lithium nickel manganese cobalt-containing composite oxide that is base material

The method for producing a positive electrode active material for a lithium-ion secondary battery of the present invention has a feature in that used is, as a base material, a ternary-system composite oxide having a porous structure, that is, a ternary-system composite oxide which is configured by secondary particles formed with a plurality of primary particles being aggregated, in which the secondary particle has a porous structure that includes an outer shell section formed with the aggregated primary particles, an aggregated section existing inside the outer shell section, formed with the aggregated primary particles, and electrically connected to the outer shell section, and a space section existing in a dispersed manner in the aggregated section, but the method for producing the composite oxide is not limited.

However, the method for producing a composite oxide with such a porous structure will be briefly described.

### (8-1) Method for producing nickel manganese cobalt-containing composite hydroxide

The particle structure with such a porous structure is inherited to the composite oxide from the nickel manganese cobalt-containing composite hydroxide (hereinafter, referred to as "composite hydroxide") that is a precursor. The composite hydroxide having this particle structure is preferably produced by crystallization reaction as described below.

### (a) Crystallization reaction

The composite hydroxide is obtained by supplying a raw material aqueous solution containing at least a transition metal and an aqueous solution containing an ammonium ion supplier into a reaction tank to form a reaction aqueous solution and performing crystallization reaction.

The process of performing crystallization reaction includes a nuclear generation process of performing nuclear generation by controlling the pH value of the reaction aqueous solution on the basis of the liquid temperature of 25°C to be 12.0 or more and 14.0 or less, and a particle growth process of growing the nuclei by controlling the pH value of the reaction aqueous solution including the nuclei obtained in the nuclear generation process on the basis of the liquid temperature of 25°C to be lower than the pH value in the nuclear generation process and to be 10.5 or more and 12.0 or less.

Then, (1) a reaction atmosphere in the nuclear generation process and a first stage (initial stage) of the particle growth process is adjusted to a non-oxidizing atmosphere having an oxygen concentration of 2% by volume or less, (2) after the first stage of the particle growth process, the reaction atmosphere is switched from the non-oxidizing atmosphere to an oxidizing atmosphere having an oxygen concentration of more than 2% by volume and 5% by volume or less and this switching operation is regarded as a second stage of the particle growth process, (3) the reaction atmosphere is then switched from the oxidizing atmosphere to the non-oxidizing atmosphere and this switching operation is regarded as a third stage of the particle growth process, (4) the reaction atmosphere is further switched from the non-oxidizing atmosphere to the oxidizing atmosphere and this switching operation is regarded as a fourth stage of the particle growth process, and (5) the reaction atmosphere is finally switched from the oxidizing atmosphere to the non-oxidizing atmosphere and this switching operation is regarded as a fifth stage of the particle growth process.

Regarding the crystallization reaction rate, which is defined by the ratio of the amount of metal to be added in each of the stages with respect to the total amount of metal to be added in the particle growth process, in each of the stages with respect to the entire particle growth process, it is preferable to perform the switching of the reaction atmosphere while the crystallization reaction rate is set to 8% or more and 20% or less at the first stage, 2% or more and 20% or less at the second stage, 12% or more and 40% or less at the third stage, 3% or more and 40% or less at the fourth stage, and 10% or more and 50% or less at the fifth stage.

### [Nuclear generation process]

In the nuclear generation process, first, a transition metal compound as a raw material in this process is dissolved in water to prepare a raw material aqueous solution. At the same time, an alkaline aqueous solution and an aqueous solution containing an ammonium ion supplier are supplied into a reaction tank and mixed to prepare a pre-reaction aqueous solution having a pH value of 12.0 or more and 14.0 or less, the pH value being measured on the basis of the liquid temperature of 25°C, and an ammonium ion concentration of 3 g/L or more and 25 g/L or less. Note that, the pH value of the pre-reaction aqueous solution can be measured with a pH meter, and the ammonium ion concentration can be measured with an ion meter.

Next, the raw material aqueous solution is supplied while this pre-reaction aqueous solution is stirred. As a result, an aqueous solution for nuclear generation, which is a reaction aqueous solution in the nuclear generation process, is formed in the reaction tank. Since the pH value of this aqueous solution for nuclear generation is within the above range, in the nuclear generation process, a nucleus hardly grows and nuclear generation occurs preferentially. Note that, in the nuclear generation process, the pH value of the aqueous solution for nuclear generation and the concentration of ammonium ions vary with nuclear generation. Therefore, it is necessary to supply an alkaline aqueous solution and an ammonia aqueous solution at an appropriate time such that the pH value of the solution in the reaction tank is maintained at a pH of 12.0 or more and 14.0 or less on the basis of the liquid temperature of 25°C and the concentration of ammonium ions is maintained at 3 g/L or more and 25 g/L or less.

In the nuclear generation process, it is necessary to allow inert gas to flow through the inside of the reaction tank so as to adjust the reaction atmosphere to a non-oxidizing atmosphere having an oxygen concentration of 2% by volume or less. Generally, the adjustment of the reaction atmosphere is preferably performed before start of the supply of the raw material aqueous solution. Thereby, the aggregated section is sufficiently formed inside of the positive electrode active material using this composite hydroxide as a precursor, and it is possible to suppress a decrease in particle density by formation of the space section.

In the nuclear generation process, by supplying a raw material aqueous solution, an alkaline aqueous solution, and an aqueous solution containing an ammonium ion supplier to the aqueous solution for nuclear generation, new nuclei are continuously generated. Then, the nuclear generation process is completed at a time point when a predetermined amount of nuclei is generated in the aqueous solution for nuclear generation.

At this time, the amount of production of nuclei can be determined from the amount of metal compound that is included in the raw material aqueous solution having been supplied to the aqueous solution for nuclear generation. The amount of production of nuclei in the nuclear generation process is not particularly limited, but, in order to obtain secondary particles of composite hydroxide having a narrow particle size distribution, the amount is set to preferably 0.1 atomic% or more and 2 atomic% or less and more preferably 0.1 atomic% or more and 1.5 atomic% or less with respect to the metal element in the metal compound that is included in the raw material aqueous solution that is supplied through the nuclear generation process and the particle growth process. Note that, the reaction time in the nuclear generation process is generally 0.2 minutes or longer and 5 minutes or shorter.

### [Particle growth process]

After completion of the nuclear generation process, the pH value of the aqueous solution for nuclear generation in the reaction tank is adjusted to 10.5 or more and 12.0 or less on the basis of the liquid temperature of 25°C to form an aqueous solution for particle growth, which is a reaction aqueous solution in the particle growth process. The pH value can also be adjusted by stopping supply of the alkaline aqueous solution. However, in order to obtain secondary particles of composite hydroxide having a narrow particle size distribution, it is preferable to temporarily stop supply of all the aqueous solutions and to adjust the pH value. Specifically, it is preferable to adjust the pH value by stopping supply of all the aqueous solutions and then supplying an inorganic acid of the same type as an acid constituting a metal compound as a raw material to the aqueous solution for nuclear generation.

Next, the raw material aqueous solution is supplied while this aqueous solution for particle growth is stirred. At this time, since the pH value of the aqueous solution for particle growth is within the above range, a new nucleus is hardly generated, nucleus (particle) growth proceeds, and secondary particles of composite hydroxide having predetermined particle sizes are formed. Note that, also in the particle growth process, the pH value and the ammonium ion concentration of the aqueous solution for particle growth vary with particle growth. Therefore, it is necessary to supply the alkaline aqueous solution and the ammonia aqueous solution at an appropriate time to maintain the pH value and the ammonium ion concentration within the above ranges.

Particularly, in the method for producing composite hydroxide of the present invention, an operation of switching the reaction atmosphere from a non-oxidizing atmosphere to an oxidizing atmosphere having an oxygen concentration of more than 2% by volume and 5% by volume or less or switching the reaction atmosphere from the non-oxidizing atmosphere to a non-oxidizing atmosphere having an oxygen concentration of 2% by volume or less is performed by introducing an atmosphere gas while the raw material aqueous solution is continuously supplied in the middle of the particle growth process.

In the particle growth process, it is preferable to rapidly perform switching from an oxidizing atmosphere to a non-oxidizing atmosphere or switching from a non-oxidizing atmosphere to an oxidizing atmosphere by allowing inert gas and/or oxidized gas to flow through the reaction aqueous solution in the reaction tank using a diffusing tube. Regarding the method for supplying inert gas and/or oxidized gas to the reaction aqueous solution in the reaction tank, inert gas and/or oxidized gas can also be supplied to a space, which is in contact with the reaction aqueous solution, in the reaction tank, but it is preferable to employ a method for supplying inert gas and/or oxidized gas directly into the reaction aqueous solution using a diffusing tube. Thereby, it is possible to shorten the switching time of atmosphere and to appropriately set the size of the center and the thicknesses of the first low density layer, the high density layer, the second low density layer, and the outer shell layer.

In such a method for producing composite hydroxide, in the nuclear generation process and the particle growth process, metal ions become nuclei or primary particles and precipitate out. Therefore, the ratio of the liquid component with respect to the metal component in the aqueous solution for nuclear generation and the aqueous solution for particle growth increases. As a result, the concentration of raw material aqueous solution decreases apparently, and particularly, in the particle growth process, there is a possibility that growth of secondary particles of composite hydroxide will stagnate. Therefore, in order to suppress an increase in the liquid component, it is preferable that after completion of the nuclear generation process and during the particle growth process, a part of the liquid component of the aqueous solution for particle growth is discharged to outside the reaction tank. Specifically, it is preferable that supplying and stirring of the raw material aqueous solution, an alkaline aqueous solution, and an aqueous solution including an ammonium ion supplier are stopped once, the nuclei and composite hydroxide in the aqueous solution for particle growth are caused to precipitate and settle, and the supernatant liquid of the aqueous solution for particle growth is discharged. As a result of this kind of operation, it is possible to increase the relative concentration of the mixed aqueous solution in the aqueous solution for particle growth, so not only is it possible to prevent stagnation of particle growth and control the particle size distribution of secondary particles of composite hydroxide to be obtained to be within a suitable range, it is also possible to improve the density of the whole secondary particles.

### [Particle size control of secondary particles of composite hydroxide]

The particle size of secondary particles of composite hydroxide can be controlled by the time of the particle growth process or nuclear generation process, the pH value of the aqueous solution for nuclear generation or the aqueous solution for particle growth, and the supplied amount of the raw material aqueous solution. For example, by performing the nuclear generation process at a high pH value or by lengthening the time of the particle generation process, it is possible to increase the amount of the metal compound that is included in the raw material aqueous solution to be supplied and increase the amount of production of nuclei, and thus the particle size of secondary particles of composite hydroxide to be obtained can be decreased. On the other hand, by suppressing the amount of production of nuclei in the nuclear generation process, the particle size of secondary particles of composite hydroxide to be obtained can be increased.

### [Another embodiment of crystallization reaction]

In the method for producing composite hydroxide of the present invention, it is also possible to prepare an aqueous solution for adjusting component in which the pH value and the ammonium ion concentration have been adjusted to be suitable for the particle growth process, separately the aqueous solution for nuclear generation, add and mix the aqueous solution for nuclear generation obtained after the nuclear generation process, preferably, an aqueous solution which is obtained by removing a part of the liquid component from the aqueous solution for nuclear generation obtained after the nuclear generation process, and perform the particle growth process using this aqueous solution as the aqueous solution for particle growth.

In this case, it is possible to more distinctly separate the nuclear generation process and the particle growth process. Thus, it is possible to perform control so that the reaction aqueous solution in each process is in an optimal state. Particularly, it is possible to perform control so that the pH value of the aqueous solution for particle growth is in an optimal range from the start of the particle growth process. Thus, it is possible to make the particle size distribution of secondary particles of composite hydroxide to be obtained narrower.

### (8-2) Supplied aqueous solution

### a) Raw material aqueous solution

In the present invention, the ratio of metal elements included in the raw material aqueous solution becomes substantially the composition ratio of composite hydroxide to be obtained.

The transition metal compound for adjusting the raw material aqueous solution is not particularly limited, but, from the viewpoint of ease of handling, water soluble nitrates, sulfates, chlorides, and the like are preferably used, and from the viewpoint of cost and preventing halogen from being mixed in, it is particularly preferable that sulfates are suitably used.

Furthermore, when an additive element M (M is one or more additive elements selected from Mg, Al, Si, Ca, Ti, V, Cr, Zr, Nb, Mo, Hf, Ta, and W) is included in the composite hydroxide, as a compound for supplying the additive element M, similarly, a water soluble compound is preferred, for example, it is possible to suitably use magnesium sulfate, aluminum sulfate, sodium silicate, calcium sulfate, titanium sulfate, peroxititanic acid ammonium, potassium titanium oxalate, vanadium sulfate, ammonium vanadate, chromium sulfate, potassium chromate, zirconium sulfate, niobium oxalate, ammonium molybdate, hafnium sulfate, sodium tantalate, sodium tungstate, ammonium tungstate, and the like.

The concentration of the raw material aqueous solution, for the total metal compound, is set to preferably 1 mol/L or more and 2.6 mol/L or less and more preferably 1.5 mol/L or more and 2.2 mol/L or less.

Furthermore, the supplied amount of the raw material aqueous solution is set such that at the end of the particle growth process, the concentration of the product in the aqueous solution for particle growth is preferably 30 g/L or more and 200 g/L or less more preferably 80 g/L or more and 150 g/L or less.

### b) Alkaline aqueous solution

The alkaline aqueous solution that adjusts the pH value in the reaction aqueous solution is not particularly limited, and it is possible to use a general alkali metal hydroxide aqueous solution such as sodium hydroxide or potassium hydroxide. Note that, the alkali metal hydroxide aqueous solution may be added directly to the reaction aqueous solution, but from the viewpoint of ease of pH control. the alkali metal hydroxide aqueous solution is preferably added as an aqueous solution. In this case, the concentration of the alkali metal hydroxide aqueous solution is set to preferably 20% by mass or more and 50% by mass or less and more preferably 20% by mass or more and 30% by mass or less.

The method for supplying the alkaline aqueous solution is not particularly limited as long as the pH value of the reaction aqueous solution does not become locally high and is maintained within a predetermined range. For example, the alkaline aqueous solution may be supplied using a pump, such as a constant volume pump, for which the flow rate can be controlled while the reaction aqueous solution is sufficiently stirred.

### c) Aqueous solution including ammonium supplier

The aqueous solution including an ammonium ion supplier is also not particularly limited, and for example, it is possible to use ammonia water or an aqueous solution of ammonium sulfate, ammonium chloride, ammonium carbonate, ammonium fluoride, and the like.

When ammonia water is used as the ammonium ion supplier, the concentration thereof is set to preferably 20% by mass or more and 30% by mass or less and more preferably 22% by mass or more and 28% by mass or less. By regulating the concentration of ammonia water to be within such a range, it is possible to keep the loss of ammonia due to volatilization and the like to a minimum. Thus, improvement in production efficiency can be achieved.

Note that, in the method for supplying the aqueous solution including an ammonium ion supplier, similarly to the case of the alkaline aqueous solution, the aqueous solution can be supplied using a pump for which the flow rate can be controlled.

### [pH value]

In the method for producing composite hydroxide of the present invention, it is necessary to control the pH value of the reaction aqueous solution on the basis of the liquid temperature of 25°C to be 12.0 or more and 14.0 or less in the nuclear generation process and to be 10.5 or more and 12.0 or less in the particle growth process. Note that, in either process, the fluctuation range of the pH value during the crystallization reaction is preferably controlled within ±0.2. When the fluctuation range of the pH value is large, the amount of production of nuclei and the ratio of the particle growth are not constant, and it is difficult to obtain secondary particles of composite hydroxide having a narrow particle size distribution. Note that, the pH value of the reaction aqueous solution can be measured with a pH meter.

### [Reaction atmosphere]

### a) Non-oxidizing atmosphere

In the production method of the present invention, the reaction atmosphere in the stage in which the center, the high density layer, and the outer shell layer of secondary particles of composite hydroxide are formed is a non-oxidizing atmosphere. Specifically, by introducing a non-oxidizing gas such as inert gas, the mixed atmosphere of oxygen and inert gas is controlled so that the reaction atmosphere becomes a non-oxidizing atmosphere in which the oxygen concentration in the reaction atmosphere is 2% by volume or less and preferably 1% by volume or less.

### b) Oxidizing atmosphere

On the other hand, in the stage in which the first low density layer and the second low density layer of secondary particles of composite hydroxide are formed, the reaction atmosphere is controlled to an oxidizing atmosphere. Specifically, the reaction atmosphere is controlled so that the oxygen concentration in the reaction atmosphere is more than 2% by volume and 5% by volume or less and preferably 3% by volume or more. By controlling the oxygen concentration in the reaction atmosphere to such a range, the particle growth is suppressed so that the average particle size of fine primary particles becomes 0.02 µm or more and 0.3 µm or less. Thus, the first low density layer and the second low density layer that have a sufficient density difference with the center, the high density layer, and the outer shell layer can be formed. When the oxygen concentration in the reaction atmosphere exceeds 5% by volume, in a ternary-system composite hydroxide with a composition containing at least nickel, manganese, and cobalt, the average particle size of fine primary particles becomes less than 0.02 µm and the total amount of the fine primary particles absorbed by the high density layer and the outer shell layer becomes insufficient. Thus, in a lithium nickel manganese cobalt-containing composite oxide obtained using this composite hydroxide using a precursor, an improvement of the particle strength thereof is not sufficiently achieved. On the other hand, when the oxygen concentration in the reaction atmosphere is 2% by volume or less, the average particle size of fine primary particles becomes more than 0.3 µm, so that a difference in particle size between the plate-shaped primary particles constituting the center, the high density layer, and the outer shell layer and the fine primary particles constituting the first low density layer and the second low density layer is too small. Thus, there is a concern that the formation of the space section by shrinkage of the low density layer will be insufficient.

From the same reason, a difference in oxygen concentration between the non-oxidizing atmosphere and the oxidizing atmosphere is preferably 1.0% by volume or more and more preferably 2.0% by volume or more.

### c) Switching of reaction atmosphere

The crystallization reaction in the non-oxidizing atmosphere at the first stage (initial stage) of the particle growth stage is set to preferably 8% or more and 20% or less and more preferably 10% or more and 18% or less with respect to the overall particle growth process time.

The crystallization reaction (including the switching time from the non-oxidizing atmosphere to the oxidizing atmosphere) in the oxidizing atmosphere at the second stage is set to preferably 2% or more and 20% or less and more preferably 3% or more and 15% or less with respect to the overall particle growth process time. However, the percentage of the overall crystallization reaction in the oxidizing atmosphere of the second stage and the fourth stage is set not to be out of the range of preferably 4% or more and 45% or less and more preferably 5% or more and 35% or less.

The crystallization reaction (including the switching time from the oxidizing atmosphere to the non-oxidizing atmosphere) in the non-oxidizing atmosphere at the third stage is set to preferably 12% or more and 40% or less and more preferably 14% or more and 34% or less with respect to the overall particle growth process time, and the second switching to the oxidizing atmosphere is performed at 3% or more and 40% or less and preferably 4% or more and 25% or less with respect to the overall particle growth process from the start of the particle growth process.

The crystallization reaction (including the switching time from the non-oxidizing atmosphere to the oxidizing atmosphere) in the oxidizing atmosphere at the fourth stage is set to preferably 1.2 times or more and 2.5 times or less and more preferably 1.5 times or more and 2.0 times or less the crystallization reaction rate of the second stage and set to preferably 3% or more and 40% or less and more preferably 4% or more and 25% or less with respect to the overall particle growth process time.

It is preferable that the crystallization reaction (including the switching time from the oxidizing atmosphere to the non-oxidizing atmosphere) in the non-oxidizing atmosphere at the fifth stage is set to preferably 10% or more and 50% or less and more preferably 25% or more and 45% or less with respect to the overall particle growth process time, and thus a sufficient framework of the outer shell section is formed. After the elapse of a predetermined time, the crystallization reaction is finally completed.

Note that, the crystallization reaction rate in each of the stages is defined by the ratio of the amount of metal to be added in each of the stages with respect to the total amount of metal to be added in the particle growth process. In the practical operation, these can be controlled so that the crystallization reaction time in each of the stage becomes a predetermined ratio with respect to the time of the entire particle growth process by constantly supplying the raw material aqueous solution to make the amount of metal to be added constant.

By such crystallization reaction, it is possible to obtain composite hydroxide,
the composite hydroxide comprising secondary particles formed with a plurality of plate-shaped primary particles and fine primary particles smaller than the plate-shaped primary particles being aggregated,
in which the secondary particle includes a center mainly formed with the plate-shaped primary particles being aggregated, a first low density layer mainly formed with the fine primary particles being aggregated outside the center, a high density layer mainly formed with the plate-shaped primary particles being aggregated outside the first low density layer, a second low density layer mainly formed with the fine primary particles being aggregated outside the high density layer, and an outer shell layer mainly formed with the plate-shaped primary particles being aggregated outside the second low density layer,
a tap density is 0.95 g/cm³ or more, and
an average particle size MV of the secondary particles is 3 µm or more and 12 µm or less, and [(d90 - d10)/average particle size MV], which is an index indicating the spread of particle size distribution of the secondary particles, is 0.65 or less.

### (9) Method for producing lithium nickel manganese cobalt-containing composite oxide that is base material

The composite oxide that is a base material is obtained through a mixing process of mixing the composite hydroxide with a lithium compound to form a lithium mixture and a firing process of firing the lithium mixture formed in the mixing process in an oxidizing atmosphere at a temperature of 650°C or higher and 920°C or lower.

### (9-1) Heat treatment process

This process is arbitrarily provided and is to form composite hydroxide into heat treated particles (composite hydroxide from which the excess moisture content has been removed, and/or composite oxide converted to an oxide) before mixing with a lithium compound.

The heat treatment temperature is 105°C or higher and 750°C or lower. Therefore, it is possible to reduce the moisture remaining in the heat-treated particles even after the firing process to a certain amount and to suppress a variation in the composition of the obtained composite oxide that is a base material.

The heat treatment time is not particularly limited, but is set to preferably at least 1 hour and more preferably 5 hours or longer and 15 hours or shorter from the viewpoint of sufficiently removing the excess moisture in the composite hydroxide.

### (9-2) Mixing process

The mixing process is a process of mixing the lithium compound with composite hydroxide or heat-treated particles to obtain a lithium mixture.

In the mixing process, composite hydroxide or heat-treated particles are mixed with a lithium compound such that a ratio (Li/Me) of the number of atoms of lithium (Li) to the sum of the number of atoms (Me) of metal atoms other than lithium in the lithium mixture, specifically, nickel, cobalt, and manganese and additive elements (M) is 0.95 to 1.5, preferably 1.0 to 1.5, more preferably 1.0 to 1.35, and further preferably 1.0 to 1.2.

The lithium compound that is used in the mixing process is not particularly limited, but from the aspect of easy availability, lithium hydroxide, lithium nitrate, lithium carbonate, or a mixture of these is preferably used. Particularly, lithium hydroxide or lithium carbonate is preferably used in consideration of ease of handling and stability of quality.

The composite hydroxide or heat-treated particles are preferably sufficiently mixed with the lithium compound so as not to generate fine powder. Insufficient mixing may result in variations in Li/Me between individual particles, and may make it impossible to obtain sufficient battery characteristics in some cases. Note that, a general mixer can be used for mixing. For example, a shaker mixer, a Lodige mixer, a Julia mixer, a V blender, or the like can be used.

### (9-3) Calcination process

When using lithium hydroxide or lithium carbonate as the lithium compound, it is possible after the mixing process and before the firing process to perform a calcination process of calcining the lithium mixture at a temperature that is lower than a firing temperature described below, and at a temperature of 350°C or higher and 800°C or lower, and preferably 450°C or higher and 780°C or lower. Thereby, it is possible to sufficiently diffuse lithium into the composite hydroxide or heat-treated particles, and thus it is possible to obtain more uniform lithium composite oxide.

The holding time at the above temperature is set to preferably 1 hour or longer and 10 hours or shorter, and more preferably 3 hours or longer and 6 hours or shorter. Furthermore, the atmosphere in the calcination process is preferably an oxidizing atmosphere, and more preferably an atmosphere having an oxygen concentration of 18% by volume or more and 100% by volume or less as in the firing process described later.

### (9-4) Firing process

The firing process is a process of firing the lithium mixture obtained in the mixing process under a predetermined condition to diffuse lithium in the composite hydroxide or heat-treated particles, thereby obtaining lithium composite oxide.

In this firing process, the plate-shaped primary particles constituting the center, the high density layer, and the outer shell layer of the composite hydroxide and the heat-treated particles undergo sintering shrinkage while absorbing the fine primary particles, and the primary particles obtained after sintering form the outer shell section and the aggregated section in the positive electrode active material. Note that, the fine primary particles are started to be sintered from a lower temperature region than the plate-shaped primary particles and have a larger shrinkage than the plate-shaped primary particles. Thus, the first low density layer and the second low density layer are absorbed by the center, the high density layer, and the outer shell layer that have slow sintering progress, and a space section having an appropriate size is formed as a pore. At this time, sintering shrinkage occurs while connection between the plate-shaped primary particles that are adjacent to each other is maintained. Thus, in a positive electrode active material to be obtained, the outer shell section and the aggregated section are electrically connected and the cross-sectional area of the path thereof can be sufficiently secured. As a result, the internal resistance of the positive electrode active material is considerably reduced, and when a secondary battery is configured, output characteristics can be improved without impairing the battery capacity and cycle characteristics.

Such a particle structure of the composite oxide is basically determined depending on the particle structure of the composite hydroxide that is a precursor. However, since the particle structure may be affected by the composition thereof, firing conditions, and the like, it is preferable that testing is performed beforehand, and the respective conditions are appropriately adjusted so as to have a desired structure.

Note that, a furnace that is used in the firing process is not particularly limited, and a batch type or continuous type electric furnace is preferably used. This is also the same for the furnace used in the heat treatment process and the calcination process.

### a) Firing temperature

The firing temperature of the lithium mixture is necessarily set to 650°C or higher and 920°C or lower. When the firing temperature is lower than 650°C, lithium is not sufficiently diffused into the composite hydroxide or heat-treated particles, so that excessive lithium or unreacted composite hydroxide or heat-treated particles remain, and the crystallinity of a positive electrode active material to be obtained will be insufficient. On the other hand, when the firing temperature exceeds 920°C, there is a possibility that pores in the secondary particles of the positive electrode active material are crushed, and severe sintering will occur among the secondary particles of the positive electrode active material, which causes abnormal particle growth to occur, and thus the ratio of irregular shaped coarse particles increases. From the viewpoint of controlling the aggregated section and the space section that constitute the secondary particle within appropriate sizes, respectively, the firing temperature of the lithium mixture is set to preferably 700°C or higher and 920°C or lower and more preferably 750°C or higher and 900°C or lower.

Furthermore, the temperature rising rate in the firing process is set to preferably 2°C/min or more and 10°C/min or less and more preferably 5°C/min or more 10°C/min or less. Further, it is more preferable that the temperature during the firing process is maintained at a temperature near the melting point of the lithium compound for preferably 1 hour or longer and 5 hours or shorter and more preferably 2 hours or longer and 5 hours or shorter.

### b) Firing time

Of the firing time, the time during which the temperature is maintained at the aforementioned firing temperature is set to preferably at least 2 hours and more preferably 4 hours or longer and 24 hours or shorter. When the time during which the temperature is maintained at the firing temperature is shorter than 2 hours, lithium is not sufficiently diffused into the composite hydroxide or heat-treated particles, so that excessive lithium or unreacted composite hydroxide or heat-treated particles remain, and there is a concern that the crystallinity of a positive electrode active material to be obtained will be insufficient.

Note that, after the time for maintaining the firing temperature, the cooling rate from the firing temperature to at least 200°C is set to preferably 2°C/min or more and 10°C/min or less and more preferably 3°C/min or more 7°C/min or less.

### c) Firing atmosphere

The atmosphere when firing is preferably an oxidizing atmosphere, more preferably an atmosphere having an oxygen concentration of 18% by volume or more and 100% by volume or less, and particularly preferably a mixed atmosphere of oxygen having the above oxygen concentration and an inert gas (air or oxygen flow). When the oxygen concentration is less than 18% by volume, there is a concern that the crystallinity of the positive electrode active material will be insufficient.

### (9-5) Crushing process

This process is arbitrarily provided and is to crush an aggregate or a sintered body when the secondary particles constituting the composite oxide obtained by the firing process may aggregate or a light amount of sintering may occur. This makes it possible to adjust the average particle size and the particle size distribution of the obtained positive electrode active material within a preferable range.

The crushing is performed, for example, using a well-known means such as a pin mill or a hammer mill by adjusting the crushing force within an appropriate range so that the secondary particles are not destroyed.

### 3. Lithium-ion secondary battery

The lithium-ion secondary battery of the present invention can adopt the same configuration as that of a general non-aqueous electrolyte secondary battery that includes constituent members such as a positive electrode, a negative electrode, a separator, and a non-aqueous electrolyte. Alternatively, the lithium-ion secondary battery of the present invention can adopt the same configuration as that of a general solid electrolyte secondary battery that includes constituent members such as a positive electrode, a negative electrode, and a solid electrolyte. That is, the present invention can be widely applied to a secondary battery including a non-aqueous electrolyte solution secondary battery and an all-solid-state lithium secondary battery as long as they are secondary batteries that are charged and discharged by de-inserting and inserting lithium-ions. Note that, embodiments that will be described below are merely examples, and the present invention can be applied to lithium-ion secondary batteries that are modified or improved in various ways based on the embodiments described in the present specification.

### (1) Constituent members

### a) Positive electrode

Using the above-described positive electrode active material, for example, a positive electrode of a lithium-ion secondary battery is prepared as follows.

First, a conductive material and a binding agent are mixed with the positive electrode active material of the present invention. Further, activated carbon and a solvent, for example, for adjusting viscosity are added as necessary. These are kneaded to prepare a positive electrode mixture paste. At this time, a mixing ratio among the components in the positive electrode mixture paste is also an important factor for determining performance of the lithium-ion secondary battery. For example, when the solid content of the positive electrode mixture excluding the solvent is 100 parts by mass, the content of the positive electrode active material can be 60 parts by mass or more and 95 parts by mass or less, the content of the conductive material can be 1 part by mass or more and 20 parts by mass or less, and the content of the binding agent can be 1 part by mass or more and 20 parts by mass or less as in a positive electrode of a general lithium-ion secondary battery.

The obtained positive electrode mixture paste is applied to a surface of a collector, for example, made of aluminum foil and dried to scatter the solvent. Pressurization may be performed by a roll press or the like in order to increase the electrode density as necessary. In this way, a sheet-shaped positive electrode can be prepared. The sheet-shaped positive electrode is cut into an appropriate size according to a target battery, for example, and used for preparing a battery. Note that, the method for preparing a positive electrode is not limited to the exemplified ones, and other methods may be used.

Examples of the conductive material include graphite (natural graphite, artificial graphite, expanded graphite, and the like) and a carbon black-based material such as acetylene black or Ketjen black.

The binding agent serves to hold the active material particles together, and examples thereof include polyvinylidene fluoride (PVDF), polytetrafluoroethylene (PTFE), a fluorocarbon rubber, an ethylene propylene diene rubber, styrene butadiene, a cellulose-based resin, and polyacrylic acid.

In addition, a solvent that disperses the positive electrode active material, the conductive material, and activated carbon and dissolves the binding agent can be added to the positive electrode mixture as necessary. Specifically, as the solvent, an organic solvent such as N-methyl-2-pyrrolidone can be used. Activated carbon can be added to the positive electrode mixture in order to increase electric double layer capacity.

### b) Negative electrode

Metallic lithium, a lithium alloy, or the like can be used for the negative electrode. In addition, a product formed by mixing a binding agent with a negative electrode active material capable of inserting and de-inserting lithium-ions, adding an appropriate solvent thereto to form a paste-like negative electrode mixture, applying the negative electrode mixture to a surface of a collector made of metal foil such as copper, drying the negative electrode mixture, and compressing the resulting product to increase the electrode density as necessary can be used.

Examples of the negative electrode active material include a lithium-containing substance such as metallic lithium or a lithium alloy, a fired organic compound capable of inserting and de-inserting lithium-ions, such as natural graphite, artificial graphite, or a phenolic resin, and a powdery carbon substance such as coke. In this case, as the negative electrode binding agent, similarly to the positive electrode, a fluorine-containing resin such as PVDF can be used, and as the solvent for dispersing these active materials and the binding agent, an organic solvent such as N-methyl-2-pyrrolidone can be used.

### c) Separator

The separator is sandwiched between the positive electrode and the negative electrode in the non-aqueous electrolyte secondary battery, and has a function of separating the positive electrode from the negative electrode and holding the non-aqueous electrolyte. As such a separator, for example, a polyethylene or polypropylene thin film having a large number of fine pores can be used. However, the separator is not particularly limited as long as having the above-described function.

### d) Electrolyte

As the non-aqueous electrolyte that is used in the non-aqueous electrolyte secondary battery, a non-aqueous electrolyte solution obtained by dissolving a lithium salt as a supporting salt in an organic solvent, or the like is used.

As the organic solvent that is used in the non-aqueous electrolyte solution, one selected from the group consisting of a cyclic carbonate such as ethylene carbonate, propylene carbonate, butylene carbonate, or trifluoropropylene carbonate, a chain carbonate such as diethyl carbonate, dimethyl carbonate, ethylmethyl carbonate, or dipropyl carbonate, an ether compound such as tetrahydrofuran, 2-methyltetrahydrofuran, or dimethoxy ethane, a sulfur compound such as ethylmethylsulfone or butanesulton, and a phosphorus compound such as triethyl phosphate or trioctyl phosphate can be used singly, or two or more selected therefrom can be used in mixture.

Examples of the supporting salt include LiPF₆, LiBF₄, LiClO₄, LiAsF₆, LiN(CF₃SO₂)₂, and a composite salt thereof.

The non-aqueous electrolyte solution may contain a radical scavenger, a surfactant, a flame retardant, and the like.

Meanwhile, as the solid electrolyte that is used in a solid electrolyte secondary battery such as an all-solid-state lithium secondary battery, Li_{1.3}Al_{0.3}Ti_{1.7}(PO₄)₃, Li₂S-SiS₂, or the like can be used. The solid electrolyte has a property of withstanding a high voltage. As the solid electrolyte, there are an inorganic solid electrolyte and an organic solid electrolyte.

As the inorganic solid electrolyte, there are an oxide solid electrolyte, a sulfide solid electrolyte, and the like.

As the oxide solid electrolyte, an oxide containing oxygen (O) and having lithium-ion conductivity and an electronic insulating property can be used. For example, lithium phosphate (Li₃PO₄), Li₃PO₄Nₓ, LiBO₂Nₓ, LiNbO₃, LiTaO₃, Li₂SiO₃, Li₄SiO₄-Li₃PO₄, Li₄SiO₄-Li₃VO₄, Li₂O-B₂O₃₋P₂O₅, Li₂O-SiO₂, Li₂O-B₂O₃-ZnO, Li₁₊ₓAlₓTi₂₋ₓ(PO₄)₃ (0 ≤ X ≤ 1), Li₁₊ₓAlₓGe₂₋ₓ(PO₄)₃ (0 ≤ X ≤ 1), LiTi₂(PO₄)₃, Li₃ₓLa_{2/3-x}TiO₃ (0 ≤ X ≤ 2/3), Li₅La₃Ta₂O₁₂, Li₇La₃Zr₂O₁₂, Li₆BaLa₂Ta₂O₁₂, Li_{3.6}Si_{0.6}P_{0.4}O₄, or the like can be used.

As the sulfide solid electrolyte, a sulfide containing sulfur (S) and having lithium-ion conductivity and an electronic insulating property can be used. For example, Li₂S-P₂S₅, Li₂S-SiS₂, LiI-Li₂S-SiS₂, LiI-Li₂S-P₂S₅, LiI-Li₂S-B₂S₃, Li₃PO₄-Li₂S-Si₂S, Li₃PO₄-Li₂S-SiS₂, LiPO₄-Li₂S-SiS, LiI-Li₂S-P₂O₅, LiI-Li₃PO₄-P₂S₅, or the like can be used.

As the inorganic solid electrolyte other than the oxide solid electrolyte and the sulfide solid electrolyte, for example, Li₃N, LiI, Li₃N-LiI-LiOH, or the like can be used.

As the organic solid electrolyte, a high-molecular-weight compound exhibiting ionic conductivity can be used. For example, polyethylene oxide, polypropylene oxide, copolymers thereof, or the like can be used. Furthermore, the organic solid electrolyte can contain a supporting salt (lithium salt).

Note that, when the solid electrolyte is used, in order to secure contact between the electrolyte and the positive electrode active material, a solid electrolyte can be mixed also in the positive electrode material.

### (2) Configuration of lithium-ion secondary battery

The configuration of the lithium-ion secondary battery is not particularly limited, a configuration including a positive electrode, a negative electrode, a separator, a non-aqueous electrolyte, and the like in a non-aqueous electrolyte secondary battery or a configuration including a positive electrode, a negative electrode, a solid electrolyte, and the like in a solid electrolyte secondary battery may be employed. Furthermore, the shape of the secondary battery is not particularly limited, and various shapes such as a cylindrical shape or layered shape can be employed.

In the case of a non-aqueous electrolyte secondary battery, for example, the positive electrode and the negative electrode are laminated via the separator to form an electrode body, the electrode body is impregnated with a non-aqueous electrolyte, a positive electrode collector is connected to a positive electrode terminal leading to the outside using a current collecting lead or the like, a negative electrode collector is connected to a negative electrode terminal leading to the outside using a current collecting lead or the like, and the resulting product is sealed in a battery case to complete a lithium-ion secondary battery.

### (3) Characteristics of lithium-ion secondary battery

As described above, the lithium-ion secondary battery of the present invention uses, as a positive electrode material, the ternary-system positive electrode active material having a porous structure in which fine particles of the W- and Li-containing compound existing on at least a part of a surface of at least a part of primary particles constituting the secondary particles are formed more finely and more uniformly and the coating films of the W- and Li-containing compound are formed more uniformly to have a more appropriate thickness. Thus, the lithium-ion secondary battery is excellent in capacity characteristics, output characteristics, and cycle characteristics. Therefore, in comparison with a conventional lithium-ion secondary battery that uses a ternary-system positive electrode active material not including W- and Li-containing compound coating and having a porous structure or a ternary-system positive electrode active material including W- and Li-containing compound coating and not having a porous structure, the lithium-ion secondary battery of the present invention can exhibit battery characteristics such as lower resistance and a high output.

### (4) Applications of lithium-ion secondary battery

As described above, the lithium-ion secondary battery of the present invention has excellent capacity characteristics, output characteristics, and cycle characteristics, and can be preferably used as a power source for a small portable electronic device (a notebook personal computer, a smartphone, a tablet terminal, a digital camera, or the like) requiring these characteristics at a high level. Furthermore, the lithium-ion secondary battery of the present invention not only can be miniaturized and can have a high output, but also has excellent safety and durability, and can simplify an expensive protection circuit, and therefore can also be preferably used as a power source for a transportation device such as an electric car that is limited in mounting space.

### Examples

Hereinafter, the present invention will be described in detail with reference to Examples and Comparative Examples. Note that, in the following Examples and Comparative Examples, unless stated otherwise, samples using special grade chemicals manufactured by Wako Pure Chemical Industries Co., Ltd. were used for preparing the composite hydroxide and the positive electrode active material. Furthermore, through the nuclear generation process and the particle growth process, the pH value of the reaction aqueous solution was measured by a pH controller (NPH-690D manufactured by Nissin Rika Co., Ltd.), and by adjusting the supplied amount of sodium hydroxide aqueous solution based on the measured value, the fluctuation range of the pH value of the reaction aqueous solution in each process was controlled to be within the range of ±0.2.

### (Example 1)

### a) Production of composite hydroxide

### [Nuclear generation process]

First, 14 L of water was put in a reaction tank, and the temperature in the tank was set to 40°C while water was stirred. At this time, a nitrogen gas was circulated in the reaction tank for 30 minutes to set the reaction atmosphere to a non-oxidizing atmosphere having an oxygen concentration of 2% by volume or less. Subsequently, a 25% by mass sodium hydroxide aqueous solution and 25% by mass ammonia water were supplied into the reaction tank in appropriate amounts, and adjustment was performed such that a pH value was 12.6 on the basis of the liquid temperature of 25°C and an ammonium ion concentration was 10 g/L, thereby forming a pre-reaction aqueous solution.

At the same time, nickel sulfate, manganese sulfate, and cobalt sulfate were dissolved in water such that a molar ratio among the metal elements satisfied Ni : Mn : Co = 1 : 1 : 1 to prepare a 2 mol/L raw material aqueous solution.

Next, the raw material aqueous solution was supplied to the pre-reaction aqueous solution at 115 ml/min to form an aqueous solution for the nuclear generation process, and nuclear generation was performed for 1 minute. At this time, a 25% by mass sodium hydroxide aqueous solution and 25% by mass ammonia water were supplied at an appropriate time to maintain the pH value and ammonium ion concentration of the aqueous solution for nuclear generation within the above ranges.

### [Particle growth process]

After completion of nuclear generation, supply of all the aqueous solutions was stopped, and sulfuric acid was added to adjust the pH value to 11.2 on the basis of the liquid temperature of 25°C, thereby forming an aqueous solution for particle growth. It was confirmed that the pH value had reached a predetermined value. Thereafter, the raw material aqueous solution was supplied at the same constant rate of 115 ml/min as in the nuclear generation process to grow the nuclei (particles) generated in the nuclear generation process.

After crystallization in a non-oxidizing atmosphere from the start of the particle growth process, as the first stage, was continued for 35 minutes (14.6% with respect to the entire particle growth process), air was allowed to flow through the inside of the reaction tank using a ceramic diffusing tube (manufactured by Kinoshita Rika Kogyo Co., Ltd.) having a pore size of 20 µm to 30 µm while the supply of the raw material aqueous solution was continued so as to adjust the reaction atmosphere to an oxidizing atmosphere having an oxygen concentration of 5% by volume or less (switching operation 1).

After crystallization in an oxidizing atmosphere from the switching operation 1, as the second stage, was continued for 20 minutes (8.3% with respect to the entire particle growth process), nitrogen was allowed to flow through the inside of the reaction tank using a diffusing tube while the supply of the raw material aqueous solution was continued so as to adjust the reaction atmosphere to a non-oxidizing atmosphere having an oxygen concentration of 2% by volume or less (switching operation 2).

After crystallization in a non-oxidizing atmosphere from the switching operation 2, as the third stage, was continued for 65 minutes (27.1% with respect to the entire particle growth process), air was allowed to flow through the inside of the reaction tank using a diffusing tube while the supply of the raw material aqueous solution was continued so as to adjust the reaction atmosphere to an oxidizing atmosphere having an oxygen concentration of 5% by volume or less (switching operation 3).

After crystallization reaction in an oxidizing atmosphere from the switching operation 3, as the fourth stage, was continued for 25 minutes (10.4% with respect to the entire particle growth process), nitrogen was allowed to flow through the inside of the reaction tank using a diffusing tube while the supply of the raw material aqueous solution was continued so as to adjust the reaction atmosphere to a non-oxidizing atmosphere having an oxygen concentration of 2% by volume or less (switching operation 4).

After the crystallization reaction in a non-oxidizing atmosphere from the switching operation 4, as the fifth stage, was continued for 95 minutes (39.6% with respect to the entire particle growth process), the supply of all of the aqueous solutions including the raw material aqueous solution was stopped to complete the particle growth process. Thereafter, the obtained product was washed with water, filtered, and dried to obtain 4500 g of powdered composite hydroxide particles. The crystallization reaction rate in the entire oxidizing atmosphere was 18.7%.

Note that, in the particle growth process, a 25% by mass sodium hydroxide aqueous solution and 25% by mass ammonia water were supplied at an appropriate time through the process to maintain the pH value and ammonium ion concentration of the aqueous solution for particle growth within the above ranges.

### b) Evaluation of composite hydroxide

### [Composition]

By performing analysis using an ICP emission spectrophotometer (ICPE-9000 manufactured by SHIMADZU CORPORATION), the composition of this composite hydroxide was confirmed to be expressed by general formula: Ni_{0.33}Mn_{0.33}Co_{0.33}(OH)₂.

### [Particle structure]

A part of the composite hydroxide was embedded in a resin, cross section polisher (IB-19530CP manufactured by JEOL Ltd.) processing was performed so that the cross section could be observed, and then 10 or more secondary particles of the composite hydroxide were observed by a field emission type scanning electron microscope (FE-SEM: JSM-6360LA manufactured by JEOL Ltd.). As a result, it was confirmed that this composite hydroxide has a center formed with plate-shaped primary particles being aggregated and includes a first low density layer formed with fine primary particles being aggregated, a high density layer formed with plate-shaped primary particles being aggregated, a second low density layer formed with fine primary particles being aggregated, and an outer shell layer formed with plate-shaped primary particles being aggregated, which are formed outside of the center, and some of the plate-shaped primary particles constituting the center, the high density layer, and the outer shell layer are connected with each other. The maximum outer diameters (major-axis diameters) of ten or more fine primary particles and plate-shaped primary particles existing in the cross-section of the secondary particle were measured, an average value thereof was determined, this value was set as the particle size of the fine primary particle or the plate-shaped primary particle in this secondary particle, then regarding ten or more secondary particles, the particle sizes of fine primary particles and plate-shaped primary particles were determined similarly, and an average of the obtained particle sizes of these secondary particles was determined. The average particle size of the plate-shaped primary particles was 0.53 µm, and the average particle size of the fine primary particles was 0.09 µm.

The ratios of the radius of the center and the thicknesses of the first low density layer, the high density layer, the second low density layer, and the outer shell layer to the particle size of the secondary particle were measured and calculated, and as a result, the ratios were 25%, 10%, 5%, 4%, and 6%, respectively.

### [Average particle size MV and particle size distribution]

A laser diffraction scattering type particle size analyzer (Microtrac MT3300EXII manufactured by MicrotracBEL Corp.) was used to measure the average particle size MV of the secondary particles of the composite hydroxide and to measure d10 and d90, and [(d90 - d10)/average particle size MV], which is an index indicating the spread of particle size distribution, was calculated. As a result, the average particle size MV was confirmed to be 5.4 µm, and [(d90 - d10)/average particle size MV] was confirmed to be 0.50.

### [Tap density]

The tap density was measured by a tapping machine (KRS-406 manufactured by Kuramochi Scientific Instruments Co., Ltd.). As a result, the tap density was confirmed to be 1.15 g/cm³.

### c) Preparation of composite oxide as base material

The composite hydroxide obtained as described above was subjected to a heat treatment in an air (oxygen concentration: 21% by volume) flow at 120°C for 12 hours (heat treatment process), then sufficiently mixed with lithium hydroxide using a shaker mixer device (TURBULA TypeT2C manufactured by Willy et Bacoffen (WAB)) such that Li/Me was 1.10 to obtain a lithium mixture (mixing process).

The temperature of this lithium mixture was raised to 800°C in an oxygen (oxygen concentration: 100% by volume) flow at a temperature rising rate of 1.5°C/min. The lithium mixture was held at this temperature for 3 hours to be fired, and cooled to room temperature at a cooling rate of about 4°C/min (firing process). The lithium nickel manganese cobalt-containing composite oxide obtained in this way had aggregation or a light amount of sintering. Therefore, this composite oxide was crushed to adjust the average particle size and the particle size distribution (crushing process).

### d) Evaluation of composite oxide

### [Composition]

By performing analysis using an ICP emission spectrophotometer (ICPE-9000 manufactured by SHIMADZU CORPORATION), the composition of this composite oxide was confirmed to be expressed by general formula: Li_{1.10}Ni_{0.33}Mn_{0.33}CO_{0.33}O₂.

### [Particle structure]

A part of the composite oxide was embedded in a resin, cross section polisher (IB-19530CP manufactured by JEOL Ltd.) processing was performed so that the cross section could be observed, and then the cross section was observed by an SEM (FE-SEM: JSM-6360LA manufactured by JEOL Ltd.). As a result, it was confirmed that this composite oxide is configured by secondary particles formed with a plurality of primary particles being aggregated, and this secondary particle includes an outer shell section, an aggregated section existing in a dispersed manner inside the outer shell section and electrically connected to the outer shell section, and a space section existing between the aggregated sections inside the outer shell section and having a pore structure in which primary particles do not exist. Furthermore, from observation of the cross-sectional image including arbitrary 10 or more secondary particles obtained from the SEM observation, the average thickness of the outer shell section of the secondary particles was 0.8 µm.

### [Average particle size MV and particle size distribution]

A laser diffraction scattering type particle size analyzer (Microtrac MT3300EXII manufactured by MicrotracBEL Corp.) was used to measure the average particle size MV of the secondary particles of the composite oxide and to measure d10 and d90, and the index [(d90 - d10)/average particle size MV], which is an index indicating the spread of particle size distribution, was calculated. As a result, the average particle size MV was confirmed to be 5.1 µm, and [(d90 - d10)/average particle size MV] was confirmed to be 0.42.

### [BET specific surface area, tap density, and particle strength]

The BET specific surface area was measured by a flow method gas adsorption type specific surface area measurement device (Macsorb 1200 series manufactured by Mountech Co., Ltd.), and the tap density was measured by a tapping machine (KRS-406 manufactured by Kuramochi Scientific Instruments Co., Ltd.). As a result, the BET specific surface area was 2.6 m²/g, and the tap density was confirmed to be 1.5 g/cm³.

### e) Preparation of positive electrode active material

The composite oxide obtained as described above (3000 g) was used as a base material, tungsten oxide (56 g) was added in the W amount that was 0.35 atomic% with respect to the total number of atoms of Ni, Mn, and Co contained in the composite oxide, and the composite oxide and the tungsten oxide were sufficiently mixed using a Henschel mixer (FM10C/I manufactured by NIPPON COKE & ENGINEERING COMPANY, LIMITED) in an atmospheric air pressure at a peripheral speed of the Henschel mixer of 8 m/sec for 10 minutes to thereby obtain a mixture (dry mixing process).

After completion of the dry mixing process, the peripheral speed of the Henschel mixer was set to 6 m/sec, pure water was sprayed to the mixture only in an amount of 12.3% by mass with respect to the mass of the whole mixture using a water spraying nozzle (Hollow cone nozzle K010 manufactured by H. IKEUCHI & Co., Ltd.) at a water spray velocity of 0.025 ml/min per 1 g of the mixture in a mist state with an average particle size of 100 µm or less, while the mixing of the mixture was performed, in an atmospheric air pressure, the peripheral speed of the Henschel mixer was set to 8 m/sec, and the mixing of the mixture was further continued for 10 minutes (water spray mixing process). After water spray mixing, some of the mixture was used as a sample, the moisture content thereof was measured. As a result, the moisture content thereof was 5%.

After completion of the water spray mixing process, the peripheral speed of the Henschel mixer was maintained at 8 m/sec, and the heat treatment of the mixture was performed in an atmospheric air pressure at a temperature of 120°C for 30 minutes. Thereafter, the setting of the Henschel mixer was changed so that the inside of the vessel of the Henschel mixer became a vacuum atmosphere of 0.1 MPa or less, the reduced-pressure drying of the mixture was then performed at a temperature of 150°C for 90 minutes in a vacuum atmosphere, the peripheral speed of the Henschel mixer was then decreased to 2 m/sec, and the mixture was subjected to reduced-pressure cooling in a vacuum atmosphere for 90 minutes to 25°C (drying process).

Thereafter, the obtained positive electrode active material was sieved under a condition of a sieve mesh of 38 µm.

### f) Evaluation of positive electrode active material

### [Average particle size MV and particle size distribution]

A laser diffraction scattering type particle size analyzer (Microtrac MT3300EXII manufactured by MicrotracBEL Corp.) was used to measure the average particle size MV of the positive electrode active material and to measure d10 and d90, and [(d90 - d10)/average particle size MV], which is an index indicating the spread of particle size distribution, was calculated. As a result, the average particle size MV was confirmed to be 4.8 µm (ratio of the composite oxide before being coated with the W- and Li-containing compound to the average particle size MV: 94%), and [(d90 - d10)/average particle size MV] was confirmed to be 0.42.

### [BET specific surface area and tap density]

The BET specific surface area was measured by a flow method gas adsorption type specific surface area measurement device (Macsorb 1200 series manufactured by Mountech Co., Ltd.), and the tap density was measured by a tapping machine (KRS-406 manufactured by Kuramochi Scientific Instruments Co., Ltd.). As a result, the BET specific surface area was 3.1 m²/g, and the tap density was confirmed to be 1.5 g/cm³.

### [Composition]

When the composition of the obtained positive electrode active material was analyzed by ICP emission spectrometry, it was confirmed that the content of W is the composition of 0.35 atomic% with respect to the total number of atoms of Ni, Mn, and Co.

### [Fine particles and coating film]

From the result of powder XRD analysis using an X-ray diffraction (XRD) apparatus (X'Pert PRO manufactured by Spectris Co., Ltd.), it was confirmed that the fine particles of the W- and Li-containing compound on the surface of the primary particles are formed of lithium tungstate (7Li₂WO₄·4H₂O).

This positive electrode active material was made in a state where the surface observation with a scanning transmission electron microscope (STEM: scanning electron microscope S-4700 manufactured by Hitachi High-Tech Corporation) could be performed, and then the vicinity of the surface of the secondary particles was observed with an SEM. As a result, it was confirmed that fine particles having an average particle size of 66 nm and a particle size in the range of 26 nm or more and 301 nm or less exist uniformly on the surface of the secondary particles. Note that, the obtained SEM image is shown in Fig. 3. Furthermore, after enabling the cross-sectional observation with a scanning transmission electron microscope, when the cross-section of the secondary particle was observed with an SEM, it was confirmed that coating films having an average film thickness of 3 nm exist on the entire surface and in a part of the inside of the secondary particles.

### [Porosity]

The porosity of the secondary particle was measured by image analysis of the cross-sectional image of the secondary particle with a scanning transmission electron microscope using image analysis software (such as WinRoof 6.1.1), and as a result, the porosity was 32%.

### g) Preparation of secondary battery

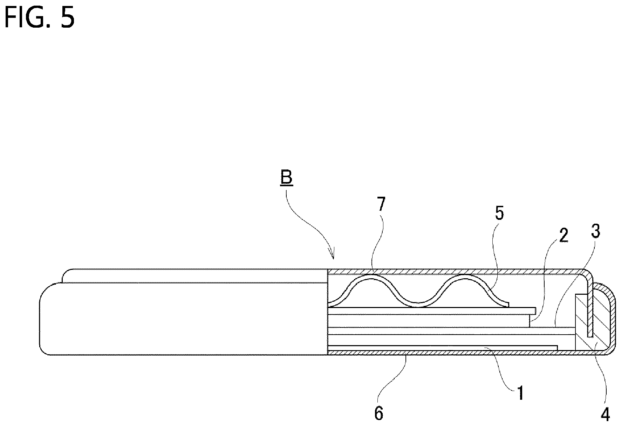

A 2032 type coin-type battery B as illustrated in Fig. 5 was produced. Specifically, 52.5 mg of the positive electrode active material obtained as described above, 15 mg of acetylene black, and 7.5 mg of PTEE were mixed and press-molded to a diameter of 11 mm and a thickness of 100 µm at a pressure of 100 MPa, thereby preparing a positive electrode 11 (electrode for evaluation) as illustrated in Fig. 1. The obtained positive electrode 11 was dried in a vacuum dryer at 120°C for 12 hours.

Next, using this positive electrode 11, a 2032 type coin-type battery was prepared in a glove box having an Ar atmosphere with a dew point controlled at -80°C. As a negative electrode 12, a negative electrode sheet stamped into a disk shape with a diameter of 14 mm and having a copper foil coated with graphite powder with an average particle size of about 20 µm and polyvinylidene fluoride was used. As a non-aqueous electrolyte solution, a mixed solution of ethylene carbonate (EC) and diethyl carbonate (DEC) mixed in equivalent amounts (manufactured by Tomiyama Pure Chemical Industries, Ltd.) containing 1 M LiPF₆ as a supporting electrolyte was used. As a separator 13, a polyethylene porous film having a film thickness of 25 µm was used. In this way, a 2032 type coin-type battery having a gasket 14 and a wave washer 15 and including a positive electrode can 16 and a negative electrode can 17 was assembled.

### f) Battery evaluation

### [Positive electrode interface resistance]

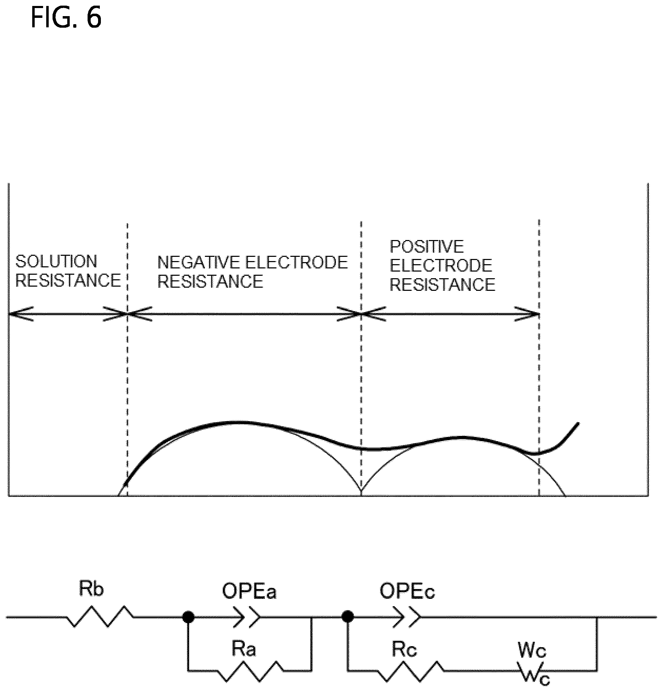

In measurement of the positive electrode interface resistance, a 2032 type coin-type battery was charged at a charging potential of 4.4 V using an impedance measuring method, and a frequency response analyzer and a potentiogalvanostat (1255B manufactured by Solartron Analytical Inc.) were used to obtain the Nyquist plot illustrated in Fig. 6. The Nyquist plot illustrated in Fig. 6 is expressed as the sum of the characteristic curves indicating the solution resistance, the negative electrode resistance and the capacity thereof, and the positive electrode resistance (interface resistance) and the capacity thereof, and thus, on the basis of the Nyquist plot, the fitting calculation was carried out to calculate the positive electrode interface resistance value by using the equivalent circuit illustrated in Fig. 6. Note that, regarding the positive electrode interface resistance, on the basis of the positive electrode active material of Comparative Example 1 described below, a resistance decrease rate with respect to the positive electrode active material of Comparative Example 1 is presented. As a result, the positive electrode interface resistance was reduced by 12% with respect to Comparative Example 1.

### [Discharge capacity maintenance rate]

The 2032 type coin-type battery was left for about 24 hours after being prepared. After an open circuit voltage (OCV) was stabilized, a charge and discharge test was performed in which a current density with respect to the positive electrode was set to 0.1 mA/cm², charge was performed until a cutoff voltage reached 4.3 V, after a one-hour rest period, discharge was performed until the cutoff voltage reached 3.0 V, and a discharge capacity at this time was measured, and an initial discharge capacity was determined. Further, charge and discharge were repeated 100 times, and the rate of the second discharge capacity to the initial discharge capacity was regarded as the discharge capacity maintenance rate. As a result, the discharge capacity maintenance rate was 88%.

Conditions of the dry mixing process, the water spray mixing process, and the drying process, the average particle size and particle size range of fine particles existing on the surface of the secondary particles of the positive electrode active material, the average film thickness of the coating film, the porosity, the decrease rate of the positive electrode interface resistance of the lithium-ion secondary battery thus obtained, and the discharge capacity maintenance rate are presented in Table 1 and Table 2. Note that, those items of Examples 2 to 8 and Comparative Example 1 are also presented in Table 1 and Table 2, similarly.

### (Example 2)

A positive electrode active material was obtained in the same manner as in Example 1, except that, in the water spray mixing process, the peripheral speed of the Henschel mixer when water spraying was set to 18 m/sec, the water spray velocity was set to 0.016 ml/min per 1 g of the mixture, water was sprayed in an amount of 12.3% by mass with respect to the mass of the entire mixture, and then the peripheral speed of the Henschel mixer was maintained at 18 m/sec to continue the mixing for 5 minutes, and in the cooling process, the peripheral speed of the Henschel mixer when reduced-pressure cooling was set to 8 m/sec, and evaluation thereof was performed.

### (Example 3)

A positive electrode active material was obtained in the same manner as in Example 1, except that, in the dry mixing process, the mixing time was set to 20 minutes, and in the water spray mixing process, the peripheral speed of the Henschel mixer when water spraying was set to 10 m/sec, the water spray velocity was set to 0.033 ml/min per 1 g of the mixture, water was sprayed in an amount of 13.1% by mass with respect to the mass of the entire mixture, and then the peripheral speed of the Henschel mixer was set to 8 m/sec to continue the mixing for 20 minutes, and evaluation thereof was performed.

### (Example 4)

A positive electrode active material was obtained in the same manner as in Example 1, except that, in the dry mixing process, the peripheral speed of the Henschel mixer was set to 15 m/sec, and in the water spray mixing process, the peripheral speed of the Henschel mixer when water spraying was set to 8 m/sec, the water spray velocity was set to 0.025 ml/min per 1 g of the mixture, water was sprayed in an amount of 12.3% by mass with respect to the mass of the entire mixture, and then the peripheral speed of the Henschel mixer was maintained at 8 m/sec to continue the mixing for 15 minutes, and evaluation thereof was performed.

### (Example 5)

A positive electrode active material was obtained in the same manner as in Example 1, except that, in the heat treatment process, the peripheral speed of the Henschel mixer was set to 6 m/sec and the heat treatment of the mixture was performed under atmospheric air pressure at a temperature of 50°C for 20 minutes, and in the drying process, the peripheral speed of the Henschel mixer was maintained at 6 m/sec and the reduced-pressure drying of the mixture was performed in a vacuum atmosphere at a temperature of 100°C for 90 minutes, and evaluation thereof was performed.

### (Example 6)

A positive electrode active material was obtained in the same manner as in Example 1, except that, in the water spray mixing process, the mixing time after water spraying was set to 15 minutes, in the heat treatment process, the peripheral speed of the Henschel mixer was set to 10 m/sec and the heat treatment of the mixture was performed under atmospheric air pressure at a temperature of 150°C for 90 minutes, and in the drying process, the peripheral speed of the Henschel mixer was maintained at 10 m/sec and the reduced-pressure drying of the mixture was performed in a vacuum atmosphere at a temperature of 160°C for 180 minutes, and evaluation thereof was performed.

### (Example 7)

A positive electrode active material was obtained in the same manner as in Example 1, except that, in the water spray mixing process, the peripheral speed of the Henschel mixer when water spraying was set to 4 m/sec, the water spray velocity was set to 0.039 ml/min per 1 g of the mixture, water was sprayed in an amount of 11.8% by mass with respect to the mass of the entire mixture, and then the peripheral speed of the Henschel mixer was maintained at 4 m/sec to continue the mixing for 10 minutes, in the heat treatment process, the peripheral speed of the Henschel mixer was maintained at 4 m/sec and the heat treatment of the mixture was performed under atmospheric air pressure at a temperature of 120°C for 30 minutes, and in the drying process, the peripheral speed of the Henschel mixer was maintained at 4 m/sec and the reduced-pressure drying of the mixture was performed in a vacuum atmosphere at a temperature of 150°C for 90 minutes, and evaluation thereof was performed.

### (Example 8)

A positive electrode active material was obtained in the same manner as in Example 1, except that, in the water spray mixing process, the peripheral speed of the Henschel mixer when water spraying was set to 30 m/sec, the water spray velocity was set to 0.066 ml/min per 1 g of the mixture, water was sprayed in an amount of 11.8% by mass with respect to the mass of the entire mixture, and then the peripheral speed of the Henschel mixer was decreased to 20 m/sec to continue the mixing for 10 minutes, in the heat treatment process, the peripheral speed of the Henschel mixer was maintained at 20 m/sec and the heat treatment of the mixture was performed under atmospheric air pressure at a temperature of 120°C for 30 minutes, and in the drying process, the peripheral speed of the Henschel mixer was decreased to 16 m/sec and the reduced-pressure drying of the mixture was performed in a vacuum atmosphere at a temperature of 150°C for 300 minutes, and evaluation thereof was performed.

### (Comparative Example 1)

In the water spray mixing process, water spray was performed with respect to the mixture in a still standing state, water was sprayed only in an amount of 10% by mass with respect to the mass of the entire mixture, and then mixing was performed with hands using a rubber spatula. Thereafter, a positive electrode active material was obtained in the same manner as in Example 1, except that the mixture was left to stand still for 60 minutes and the mixture was dried under atmospheric air pressure at 120°C for 12 hours and cooled under atmospheric air pressure for 90 minutes to 25°C, and evaluation thereof was performed.

The vicinity of the surface of the secondary particles thus obtained was observed by a STEM. As a result, it was confirmed that fine particles having an average particle size of 650 nm and a particle size in the range of 62 nm or more and 696 nm or less exist uniformly on the surface of the primary particles. Note that, the obtained STEM image is shown in Fig. 4.

**[Table 1]**

| | Dry mixing process | | Water spray mixing process | | | | | Heat treatment process | | | Drying process | | | | Cooling process | | |
|---|---|---|---|---|---|---|---|---|---|---|---|---|---|---|---|---|---|
| | Peripheral speed (m/s) | Time (min) | Water spraying | | | Mixing | | | | | | | | | | | |
| | | | Means | Peripheral speed (m/s) | Water spray velocity (ml/min) per 1 g of mixture | Peripheral speed (m/s) | Time (min) | Temperature (°C) | Peripheral speed (m/s) | Time (min) | Atmosphere | Temperature (°C) | Peripheral speed (m/s) | Time (min) | Atmosphere | Peripheral speed (m/s) | Time (min) |
| Example 1 | 8 | 10 | Vacuum dry mixing apparatus | 6 | 0.025 | 8 | 10 | 120 | 8 | 30 | Vacuum | 150 | 8 | 90 | Vacuum | 2 | 90 |
| Example 2 | 8 | 10 | Vacuum dry mixing apparatus | 18 | 0.016 | 18 | 5 | 120 | 8 | 30 | Vacuum | 150 | 8 | 90 | Vacuum | 8 | 90 |
| Example 3 | 8 | 20 | Vacuum dry mixing apparatus | 10 | 0.033 | 8 | 20 | 120 | 8 | 30 | Vacuum | 150 | 8 | 90 | Vacuum | 2 | 90 |
| Example 4 | 15 | 10 | Vacuum dry mixing apparatus | 8 | 0.025 | 8 | 15 | 120 | 8 | 30 | Vacuum | 150 | 8 | 90 | Vacuum | 2 | 90 |
| Example 5 | 8 | 10 | Vacuum dry mixing apparatus | 6 | 0.025 | 8 | 10 | 50 | 6 | 20 | Vacuum | 100 | 6 | 90 | Vacuum | 2 | 90 |
| Example 6 | 8 | 10 | Vacuum dry mixing apparatus | 6 | 0.025 | 8 | 15 | 150 | 10 | 90 | Vacuum | 160 | 10 | 180 | Vacuum | 2 | 120 |
| Example 7 | 8 | 10 | Vacuum dry mixing apparatus | 4 | 0.039 | 4 | 10 | 120 | 4 | 30 | Vacuum | 150 | 4 | 90 | Vacuum | 2 | 90 |
| Example 8 | 8 | 10 | Vacuum dry mixing apparatus | 30 | 0.066 | 20 | 10 | 120 | 20 | 30 | Vacuum | 150 | 16 | 300 | Vacuum | 2 | 90 |
| Comparative Example 1 | 8 | 10 | Standing still for 60 minutes after mixing with rubber spatula | | | - | - | - | - | - | Air | 120 | - | 12 hours | Air | - | 90 |

**[Table 2]**

| | Positive electrode active material | | | | Lithium-ion secondary battery | |
|---|---|---|---|---|---|---|
| | Average particle size (nm) of fine particles | Particle size range (nm) of fine particles | Average film thickness (nm) of coating film | Porosity (%) | Positive electrode interface resistance decrease rate (based on Comparative Example 1: %) | Discharge capacity maintenance rate (%) |
| Example 1 | 66 | 26-301 | 3 | 32 | 12 | 88 |
| Example 2 | 54 | 18-290 | 3 | 32 | 10 | 87 |
| Example 3 | 63 | 30-310 | 3 | 32 | 9 | 83 |
| Example 4 | 72 | 33-306 | 3 | 32 | 8 | 81 |
| Example 5 | 67 | 45-320 | 3 | 32 | 11 | 87 |
| Example 6 | 60 | 47-360 | 5 | 32 | 7 | 79 |
| Example 7 | 360 | 95-430 | 5 | 32 | 5 | 78 |
| Example 8 | 12 | 5-58 | 5 | 32 | 6 | 79 |
| Comparative Example 1 | 650 | 62-696 | 10 | 32 | - | 78 |

### (Example 9)

A positive electrode active material was obtained in the same manner as in Example 1, except that, as the fourth stage, the crystallization reaction in an oxidizing atmosphere from the switching operation 3 was continued for 40 minutes (16.7% with respect to the entire particle growth process), and as the fifth stage, the crystallization reaction in a non-oxidizing atmosphere from the switching operation 4 was continued for 80 minutes (33.3% with respect to the entire particle growth process), so that the crystallization reaction rate in the entire oxidizing atmosphere was 25.0%, and evaluation thereof was performed.

The ratios of the radius of the center and the thicknesses of the first low density layer, the high density layer, the second low density layer, and the outer shell layer to the particle size of the secondary particle in the composite hydroxide were 25%, 10%, 5%, 5%, and 5%, respectively. The average particle size MV thereof was 5.5 µm, [(d90 - d10)/average particle size MV] was 0.50, and the tap density was 1.05 g/cm³.

In the composite oxide as a base material, the average thickness of the outer shell section of the secondary particles was 0.6 µm, the average particle size MV was 5.0 µm, [(d90 - d10)/average particle size MV] was 0.42, the BET specific surface area was 3.0 m²/g, and the tap density was 1.4 g/cm³.

In the positive electrode active material, the average particle size MV was confirmed to be 4.6 µm (ratio of the composite oxide before being coated with the W- and Li-containing compound to the average particle size MV: 92%), and [(d90 - d10)/average particle size MV] was confirmed to be 0.44. The BET specific surface area was 3.7 m²/g, and the tap density was confirmed to be 1.4 g/cm³. Furthermore, by SEM observation, it was confirmed that fine particles having an average particle size of 66 nm and a particle size in the range of 21 nm or more and 279 nm or less exist uniformly on the surface of the secondary particles, and it was confirmed that coating films having an average film thickness of 2 nm exist on the entire surface and in a part of the inside of the secondary particles. Further, the porosity of the secondary particles was 36%.

Conditions of the dry mixing process, the water spray mixing process, and the drying process, the average particle size and particle size range of fine particles existing on the surface of the secondary particles of the positive electrode active material, the average film thickness of the coating film, the porosity, the decrease rate of the positive electrode interface resistance of the lithium-ion secondary battery thus obtained, and the discharge capacity maintenance rate are presented in Table 3 and Table 4. Note that, those items of Examples 10 to 16 and Comparative Example 2 are also presented in Table 1 and Table 2, similarly.

### (Example 10)

A positive electrode active material was obtained in the same manner as in Example 9, except that, in the water spray mixing process, the peripheral speed of the Henschel mixer when water spraying was set to 5 m/sec, the water spray velocity was set to 0.016 ml/min per 1 g of the mixture, water was sprayed in an amount of 12.3% by mass with respect to the mass of the entire mixture, and then the peripheral speed of the Henschel mixer was maintained at 5 m/sec to continue the mixing for 5 minutes, and evaluation thereof was performed.

### (Example 11)

A positive electrode active material was obtained in the same manner as in Example 9, except that, in the water spray mixing process, the peripheral speed of the Henschel mixer when water spraying was set to 10 m/sec, the water spray velocity was set to 0.033 ml/min per 1 g of the mixture, water was sprayed in an amount of 13.1% by mass with respect to the mass of the entire mixture, and then the peripheral speed of the Henschel mixer was set to 8 m/sec to continue the mixing for 10 minutes, and evaluation thereof was performed.

### (Example 12)

A positive electrode active material was obtained in the same manner as in Example 9, except that, in the water spray mixing process, the peripheral speed of the Henschel mixer when water spraying was set to 8 m/sec, the water spray velocity was set to 0.025 ml/min per 1 g of the mixture, water was sprayed in an amount of 12.3% by mass with respect to the mass of the entire mixture, and then the peripheral speed of the Henschel mixer was maintained at 8 m/sec to continue the mixing for 10 minutes, and evaluation thereof was performed.

### (Example 13)

A positive electrode active material was obtained in the same manner as in Example 9, except that, in the heat treatment process, the peripheral speed of the Henschel mixer was set to 5 m/sec and the heat treatment of the mixture was performed under atmospheric air pressure at a temperature of 50°C for 20 minutes, and in the drying process, the peripheral speed of the Henschel mixer was maintained at 5 m/sec and the reduced-pressure drying of the mixture was performed in a vacuum atmosphere at a temperature of 100°C for 90 minutes, and evaluation thereof was performed.

### (Example 14)

A positive electrode active material was obtained in the same manner as in Example 9, except that, in the heat treatment process, the peripheral speed of the Henschel mixer was set to 10 m/sec and the heat treatment of the mixture was performed under atmospheric air pressure at a temperature of 150°C for 90 minutes, and in the drying process, the peripheral speed of the Henschel mixer was maintained at 10 m/sec and the reduced-pressure drying of the mixture was performed in a vacuum atmosphere at a temperature of 200°C for 180 minutes, and evaluation thereof was performed.

### (Example 15)

A positive electrode active material was obtained in the same manner as in Example 9, except that, in the water spray mixing process, the peripheral speed of the Henschel mixer when water spraying was set to 4 m/sec, the water spray velocity was set to 0.039 ml/min per 1 g of the mixture, water was sprayed in an amount of 11.8% by mass with respect to the mass of the entire mixture, and then the peripheral speed of the Henschel mixer was maintained at 4 m/sec to continue the mixing for 10 minutes, in the heat treatment process, the peripheral speed of the Henschel mixer was maintained at 4 m/sec and the heat treatment of the mixture was performed under atmospheric air pressure at a temperature of 120°C for 30 minutes, and in the drying process, the peripheral speed of the Henschel mixer was maintained at 4 m/sec and the reduced-pressure drying of the mixture was performed in a vacuum atmosphere at a temperature of 150°C for 90 minutes, and evaluation thereof was performed.

### (Example 16)

A positive electrode active material was obtained in the same manner as in Example 9, except that, in the water spray mixing process, the peripheral speed of the Henschel mixer when water spraying was set to 16 m/sec, the water spray velocity was set to 0.013 ml/min per 1 g of the mixture, water was sprayed in an amount of 11.8% by mass with respect to the mass of the entire mixture, and then the peripheral speed of the Henschel mixer was maintained at 16 m/sec to continue the mixing for 10 minutes, in the heat treatment process, the peripheral speed of the Henschel mixer was maintained at 16 m/sec and the heat treatment of the mixture was performed under atmospheric air pressure at a temperature of 120°C for 30 minutes, and in the drying process, the peripheral speed of the Henschel mixer was maintained at 16 m/sec and the reduced-pressure drying of the mixture was performed in a vacuum atmosphere at a temperature of 150°C for 300 minutes, and evaluation thereof was performed.

### (Example 17)

A positive electrode active material was obtained in the same manner as in Example 9, except that, in the water spray mixing process, the water spray velocity of each of two spray nozzles was set to 0.020 ml/min per 1 g of the mixture (the total water spray velocity of two nozzles was 0.039 ml/min), water was sprayed in an amount of 11.8% by mass with respect to the mass of the entire mixture, and then the peripheral speed of the Henschel mixer was maintained at 8 m/sec to continue the mixing for 15 minutes, and evaluation thereof was performed.

### (Comparative Example 2)

In the water spray mixing process, water spray was performed with respect to the mixture in a still standing state, water was sprayed only in an amount of 10% by mass with respect to the mass of the entire mixture, and then mixing was performed with hands using a rubber spatula. Thereafter, a positive electrode active material was obtained in the same manner as in Example 9, except that the mixture was left to stand still for 60 minutes and the mixture was dried under atmospheric air pressure at 120°C for 12 hours and cooled under atmospheric air pressure for 90 minutes to 25°C, and evaluation thereof was performed.

The vicinity of the surface of the secondary particles thus obtained was observed by a STEM. As a result, it was confirmed that fine particles having an average particle size of 650 nm and a particle size in the range of 62 nm to 696 nm exist uniformly on the surface of the primary particles.

**[Table 3]**

| | Dry mixing process | | Water spray mixing process | | | | | Heat treatment process | | | Drying process | | | | Cooling process | | |
|---|---|---|---|---|---|---|---|---|---|---|---|---|---|---|---|---|---|
| | Peripheral speed (m/s) | Time (min) | Water spraying | | | Mixing | | | | | | | | | | | |
| | | | Means | Peripheral speed (m/s) | Water spray velocity (ml/min) per 1 q of mixture | Peripheral speed (m/s) | Time (min) | Temperature (°C) | Peripheral speed (m/s) | Time (min) | Atmosphere | Temperature (°C) | Peripheral speed (m/s) | Time (min) | Atmosphere | Peripheral speed (m/s) | Time (min) |
| Example 9 | 8 | 10 | Vacuum dry mixing apparatus | 6 | 0.025 | 8 | 10 | 120 | 8 | 30 | Vacuum | 150 | 8 | 90 | Vacuum | 2 | 90 |
| Example 10 | 8 | 10 | Vacuum dry mixing apparatus | 5 | 0.016 | 5 | 5 | 120 | 8 | 30 | Vacuum | 150 | 8 | 90 | Vacuum | 2 | 90 |
| Example 11 | 8 | 10 | Vacuum dry mixing apparatus | 10 | 0.033 | 8 | 10 | 120 | 8 | 30 | Vacuum | 150 | 8 | 90 | Vacuum | 2 | 90 |
| Example 12 | 8 | 10 | Vacuum dry mixing apparatus | 8 | 0.025 | 8 | 10 | 120 | 8 | 30 | Vacuum | 150 | 8 | 90 | Vacuum | 2 | 90 |
| Example 13 | 8 | 10 | Vacuum dry mixing apparatus | 6 | 0.025 | 8 | 10 | 50 | 5 | 20 | Vacuum | 100 | 5 | 90 | Vacuum | 2 | 90 |
| Example 14 | 8 | 10 | Vacuum dry mixing apparatus | 6 | 0.025 | 8 | 10 | 150 | 10 | 90 | Vacuum | 200 | 10 | 180 | Vacuum | 2 | 90 |
| Example 15 | 8 | 10 | Vacuum dry mixing apparatus | 4 | 0.039 | 4 | 10 | 120 | 4 | 30 | Vacuum | 150 | 4 | 90 | Vacuum | 2 | 90 |
| Example 16 | 8 | 10 | Vacuum dry mixing apparatus | 16 | 0.013 | 16 | 10 | 120 | 16 | 30 | Vacuum | 150 | 16 | 300 | Vacuum | 2 | 90 |
| Example 17 | 8 | 10 | Vacuum dry mixing apparatus | 6 | 0.020 X 2 | 8 | 15 | 120 | 8 | 30 | Vacuum | 150 | 8 | 90 | Vacuum | 2 | 90 |
| Comparative Example 2 | 8 | 10 | Standing still for 60 minutes after mixing with rubber spatula | | | - | - | - | - | - | Air | 120 | - | 12 hours | Air | - | 90 |

**[Table 4]**

| | Positive electrode active material | | | | Lithium-ion secondary battery | |
|---|---|---|---|---|---|---|
| | Average particle size (nm) of fine particles | Particle size range (nm) of fine particles | Average film thickness (nm) of coating film | Porosity (%) | Positive electrode interface resistance decrease rate (based on Comparative Example 1: %) | Discharge capacity maintenance rate(%) |
| Example 9 | 66 | 21-279 | 2 | 36 | 12 | 88 |
| Example 10 | 61 | 35-315 | 3 | 37 | 9 | 87 |
| Example 11 | 58 | 30-300 | 2 | 36 | 10 | 88 |
| Example 12 | 55 | 25-306 | 2 | 36 | 12 | 80 |
| Example 13 | 65 | 41-312 | 3 | 37 | 10 | 83 |
| Example 14 | 56 | 23-132 | 2 | 36 | 13 | 89 |
| Example 15 | 350 | 90-390 | 5 | 37 | 5 | 78 |
| Example 16 | 23 | 1-35 | 3 | 37 | 6 | 79 |
| Example 17 | 68 | 22-281 | 2 | 36 | 12 | 87 |
| Comparative Example 2 | 630 | 60-682 | 8 | 38 | - | 79 |

It is understood that in the positive electrode active materials of Examples 1 to 16 within the range of the present invention, since fine particles of the W- and Li-containing compound are more finer and exist uniformly on the surface of the primary particles constituting the secondary particles of the positive electrode active material along with the thin coating films of the W- and Li-containing compound such as lithium tungstate, as compared with the positive electrode active material of Comparative Example 1, the positive electrode interface resistance is significantly reduced, an increase in output is realized, and the discharge capacity maintenance rate is also improved.

### Reference Signs List

- 1: Outer shell section
- 2: Aggregated section
- 3: Space section
- 4: Fine particle of w- and li-containing compound
- 5: Coating film of w- and li-containing compound
- 11: Positive electrode (electrode for evaluation)
- 12: Negative electrode
- 13: Separator
- 14: Gasket
- 15: Wave washer
- 16: Positive electrode can
- 17: Negative electrode can

## Claims

1. A positive electrode active material for a lithium-ion secondary battery, the positive electrode active material comprising:
a W- and Li-containing compound-coated lithium nickel manganese cobalt-containing composite oxide which is configured by secondary particles formed with a plurality of primary particles being aggregated and in which fine particles and coating films of a W- and Li-containing compound exist on at least a part of a surface of at least a part of the primary particles constituting the secondary particles,
wherein the secondary particle has a porous structure that includes an outer shell section formed with the aggregated primary particles, an aggregated section existing inside the outer shell section, formed with the aggregated primary particles, and electrically connected to the outer shell section, and a space section existing in a dispersed manner in the aggregated section,
a porosity as measured by cross-sectional observation of the secondary particles is 10% or more and 50% or less, and
a particle size of the fine particles of the W- and Li-containing compound existing on the surface of the secondary particle as determined from surface observation of the secondary particle using a scanning electron microscope is 5 nm or more and 400 nm or less.

2. The positive electrode active material for a lithium-ion secondary battery according to claim 1, wherein the particle size of the fine particles is 10 nm or more and 350 nm or less.

3. The positive electrode active material for a lithium-ion secondary battery according to claim 1 or 2, wherein an average film thickness of the coating films of the W- and Li-containing compound existing on the surface of the secondary particle as determined from cross-sectional observation of the secondary particle using a transmission electron microscope is 1 nm or more and 200 nm or less.

4. The positive electrode active material for a lithium-ion secondary battery according to any one of claims 1 to 3, wherein an average particle size of the fine particles is 30 nm or more and 100 nm or less.

5. The positive electrode active material for a lithium-ion secondary battery according to any one of claims 1 to 4, wherein the W- and Li-containing compound is lithium tungstate.

6. The positive electrode active material for a lithium-ion secondary battery according to claim 5, wherein the lithium tungstate includes 7Li₂WO₄·4H₂O.

7. The positive electrode active material for a lithium-ion secondary battery according to any one of claims 1 to 6, wherein an average particle size MV of the secondary particles is 3 µm or more and 10 µm or less, and [(d90 - d10)/average particle size MV], which is an index indicating the spread of particle size distribution of the secondary particles, is 0.7 or less.

8. The positive electrode active material for a lithium-ion secondary battery according to any one of claims 1 to 7, wherein a thickness of the outer shell section of the secondary particle is 0.1 µm or more and 1.0 µm or less.

9. The positive electrode active material for a lithium-ion secondary battery according to any one of claims 1 to 8, wherein a tap density is 1.0 g/cm³ or more.

10. The positive electrode active material for a lithium-ion secondary battery according to any one of claims 1 to 9, wherein a BET specific surface area is 2.0 m²/g or more and 5.0 m²/g or less.

11. The positive electrode active material for a lithium-ion secondary battery according to any one of claims 1 to 10, comprising a lithium nickel manganese cobalt-containing composite oxide that is represented by General Formula (A) : Li₁₊ᵤNiₓMn_{y}Co_{z}WₛMₜO₂, where -0.05 ≤ u ≤ 0.50, x + y + z + s + t = 1, 0.3 ≤ x ≤ 0.7, 0.15 ≤ y ≤ 0.4, 0.15 ≤ z ≤ 0.4, 0.0005 ≤ s ≤ 0.03, 0 ≤ t ≤ 0.1, M is one or more additive elements selected from Mg, Al, Si, Ca, Ti, V, Cr, Zr, Nb, Mo, Hf, Ta, and W, and has a crystal structure of a hexagonal layered rock-salt structure.

12. A method for producing a positive electrode active material for a lithium-ion secondary battery, the positive electrode active material being formed of a W- and Li-containing compound-coated lithium nickel manganese cobalt-containing composite oxide, the method comprising:
a dry mixing process of mixing a tungsten compound with a lithium nickel manganese cobalt-containing composite oxide that is a base material in an amount of 0.1% by mass or more and 5% by mass or less with respect to a total mass of the composite oxide to obtain a mixture, the composite oxide being configured by secondary particles formed with a plurality of primary particles being aggregated, the secondary particle having a porous structure that includes an outer shell section formed with the aggregated primary particles, an aggregated section existing inside the outer shell section, formed with the aggregated primary particles, and electrically connected to the outer shell section, and a space section existing in a dispersed manner in the aggregated section;
a water spray mixing process of spraying water to the mixture in an amount of 1% by mass or more and 30% by mass or less with respect to a total mass of the mixture while the mixture is stirred, to mix the mixture;
a heat treatment process of subjecting the mixture obtained after the water spray mixing process to a heat treatment at a temperature of 500°C or lower; and
a drying process of drying the mixture obtained after the heat treatment process at a temperature of 500°C or lower to obtain the W- and Li-containing compound-coated lithium nickel manganese cobalt-containing composite oxide in which fine particles of a W- and Li-containing compound exist on a surface of the primary particles,
wherein in at least the drying process, the drying is performed using a vacuum dry mixing apparatus in a vacuum atmosphere.

13. The method for producing a positive electrode active material for a lithium-ion secondary battery according to claim 12, wherein in the water spray mixing process, the stirring is performed at a peripheral speed of 4 m/sec or more and 30 m/sec or less when water spraying and the water spraying is performed at a water spray velocity of 0.01 ml/min or more and 0.1 ml/min or less per 1 g of the mixture, and after the water spraying, the mixing is continued in a time of 5 minutes or longer and 120 minutes or shorter while the stirring is performed at a peripheral speed in a range of 4 m/sec or more and 30 m/sec.

14. The method for producing a positive electrode active material for a lithium-ion secondary battery according to claim 13, wherein the water spraying is performed using a plurality of nozzles, and a water spray velocity of each of the plurality of nozzles is set to 0.005 ml/min or more and 0.02 ml/min or less per 1 g of the mixture.

15. The method for producing a positive electrode active material for a lithium-ion secondary battery according to any one of claims 12 to 14, wherein in the heat treatment process, the heat treatment is performed at a temperature of 40°C or higher and 200°C or lower in a time of 15 minutes or longer and 120 minutes or shorter while the mixture is stirred at a peripheral speed of 4 m/sec or more and 30 m/sec or less.

16. The method for producing a positive electrode active material for a lithium-ion secondary battery according to any one of claims 12 to 15, wherein in the drying process, the drying is performed at a temperature of 70°C or higher and 200°C or lower in a time of 60 minutes or longer and 240 minutes or shorter while the mixture is stirred at a peripheral speed of 4 m/sec or more and 30 m/sec or less.

17. The method for producing a positive electrode active material for a lithium-ion secondary battery according to any one of claims 12 to 16, comprising a cooling process of cooling the mixture to 25°C in a time of 60 minutes or longer and 240 minutes or shorter while the composite oxide is stirred at a peripheral speed of 1 m/sec or more and 20 m/sec or less, in a vacuum atmosphere, after the drying process.

18. The method for producing a positive electrode active material for a lithium-ion secondary battery according to any one of claims 12 to 17, wherein the dry mixing process is performed in a time of 5 minutes or longer and 50 minutes or shorter while the stirring is performed at a peripheral speed of 5 m/sec or more and 30 m/sec or less.

19. The method for producing a positive electrode active material for a lithium-ion secondary battery according to any one of claims 12 to 18, wherein the dry mixing process is performed using the vacuum dry mixing apparatus.

20. The method for producing a positive electrode active material for a lithium-ion secondary battery according to any one of claims 12 to 19, wherein the positive electrode active material for a lithium-ion secondary battery is formed of a lithium nickel manganese composite oxide that is represented by General Formula (A): Li₁₊ᵤNiₓMn_{y}Co_{z}WₛMₜO₂, where - 0.05 ≤ u ≤ 0.50, x + y + z + s + t = 1, 0.3 ≤ x ≤ 0.7, 0.15 ≤ y ≤ 0.4, 0.15 ≤ z ≤ 0.4, 0.0005 ≤ s ≤ 0.03, 0 ≤ t ≤ 0.1, M is one or more additive elements selected from Mg, Al, Si, Ca, Ti, V, Cr, Zr, Nb, Mo, Hf, Ta, and W, and has a crystal structure of a hexagonal layered rock-salt structure.

21. A lithium-ion secondary battery comprising: a positive electrode; a negative electrode; a separator; and a non-aqueous electrolyte, or a positive electrode; a negative electrode; and a solid electrolyte,
wherein the positive electrode active material for a lithium-ion secondary battery according to any one of claims 1 to 11 is used as a positive electrode active material used in the positive electrode.
